Europäisches Patentamt

European Patent Office

Office européen des brevets

(19)

(11) **EP 1 234 421 B1**

(12) ## EUROPÄISCHE PATENTSCHRIFT

(45) Veröffentlichungstag und Bekanntmachung des Hinweises auf die Patenterteilung:
**07.04.2004 Patentblatt 2004/15**

(21) Anmeldenummer: **00983163.7**

(22) Anmeldetag: **24.11.2000**

(51) Int Cl.⁷: **H04L 27/26**

(86) Internationale Anmeldenummer:
**PCT/EP2000/011742**

(87) Internationale Veröffentlichungsnummer:
**WO 2001/041389 (07.06.2001 Gazette 2001/23)**

(54) **PAR/AUSSERBANDSTRAHLUNGSREDUZIERUNG IN OFDM-SYSTEMEN**

REDUCTION OF PAR/OUT-OF-BAND RADIATION IN OFDM SYSTEMS

REDUCTION DU RAYONNEMENT HORS BANDE/RAPPORT VALEUR DE CRETE SUR VALEUR MOYENNE DANS DES SYSTEMES OFDM

(84) Benannte Vertragsstaaten:
**AT BE CH CY DE DK ES FI FR GB GR IE IT LI LU MC NL PT SE TR**

(30) Priorität: **02.12.1999 DE 19958210**

(43) Veröffentlichungstag der Anmeldung:
**28.08.2002 Patentblatt 2002/35**

(73) Patentinhaber: **Fraunhofer-Gesellschaft zur Förderung der angewandten Forschung e.V. 80686 München (DE)**

(72) Erfinder: **BREILING, Marco 91054 Erlangen (DE)**

(74) Vertreter: **Schoppe, Fritz, Dipl.-Ing. Patentanwälte Schoppe, Zimmermann, Stöckeler & Zinkler, Postfach 246 82043 Pullach bei München (DE)**

(56) Entgegenhaltungen:
**EP-A- 0 702 466     WO-A-00/72543**
**WO-A-96/19055     WO-A-99/29078**
**DE-A- 19 625 054**

- **VAN EETVELT P ET AL: "PEAK TO AVERAGE POWER REDUCTION FOR OFDM SCHERMES BY SELECTIVE SCRAMBLING" ELECTRONICS LETTERS,GB,IEE STEVENAGE, Bd. 32, Nr. 21, 10. Oktober 1996 (1996-10-10), Seiten 1963-1964, XP000683518 ISSN: 0013-5194**
- **BRUCE CARLSON, A.: "Communications systems" 1986 , MC GRAW HILL INTERNATIONAL EDITIONS , SINGAPORE XP002162800 Abbildungen 11.4-6**
- **BREILING, M.; MÜLLER-WEINFURTNER, S.H.; HUBER, J.B.: "Distortionless Reduction of Peak Power without Explicit Side Information" GLOBALCOM '00. IEEE GLOBAL TELECOMMUNICATIONS CONFERENCE, 2000, 27. November 2000 (2000-11-27) - 1. Dezember 2000 (2000-12-01), Seiten 1494-1498, XP002162799 New York**

**Beschreibung**

Die vorliegende Erfindung bezieht sich auf die digitale Nachrichtenübertragung und insbesondere auf Konzepte zur Reduktion der Außerbandstrahlung von digitalen Nachrichtensendern.

Allgemein umfaßt ein digitaler Nachrichtensender eine Quelle für Informationen, die beispielsweise ein MPEG-Audiocodierer für digitalen Rundfunk bzw. ein MPEG-Videocodierer für digitales Fernsehen sein könnte. Die Ausgangsdaten der Nachrichtenquelle, die in Form eines digitalen Bitstroms vorliegen, werden dann typischerweise unter Verwendung eines Kanal-Codierers codiert, um dem Bitstrom Redundanz hinzuzufügen, die dazu dient, im Empfänger Übertragungsfehler überwinden zu können. Daran anschließend wird der Kanal-codierte digitale Bitstrom in einen sogenannten "Interleaver" eingespeist, der die Reihenfolge der Daten untereinander nach einem dem Empfänger bekannten Algorithmus verändert, so daß sogenannte Burst-Fehler im Übertragungskanal nicht zu einem Verlust eines größeren zusammenhängenden Nachrichtenteils führen, sondern lediglich zu kleineren kurzen Verlusten, die über einen größeren Zeitraum verteilt sind. Der verschachtelte Bitstrom am Ausgang des Interleavers wird nun je nach Modulationsart unter Verwendung eines sogenannten Mappers in Modulationssymbole abgebildet.

Falls keine Modulation verwendet wird, und der digitale Bitstrom gewissermaßen ohne Modulation direkt gesendet wird, entfällt der Mapper sowie der daran anschließende Modulator.

Falls jedoch ein Modulationsverfahren verwendet wird, wie z. B. ein Mehrträgermodulationsverfahren, folgt auf den Mapper ein Modulator, der die Modulationssymbole auf die Nachrichtenträger aufmoduliert.

In jüngster Zeit wurde das OFDM-Verfahren für digitale Rundfunkanwendungen immer populärer. Bei diesem Verfahren wird eine Vielzahl von Unterträgern eingesetzt, auf die die durch den Mapper gebildeten Modulationssymbole moduliert werden. Das Modulationsverfahren ist hierbei eine inverse diskrete Fourier-Transformation, um, wie es bekannt ist, aus den vielen modulierten Trägern ein diskretes Zeitsignal zu erzeugen. Das diskrete üblicherweise komplexe Zeitsignal liegt in Form von komplexen Abtastwerten oder "Samples" vor, die dann in einen Interpolations-Tiefpaß eingespeist werden, um die sich periodisch wiederholenden Spektralanteile zu entfernen. Am Ausgang des Interpolations-Tiefpasses liegt dann ein Signal vor, das typischerweise mittels eines komplexen IQ-Modulators auf eine HF-Trägerfrequenz aufmoduliert wird, um ein HF-Signal zu erhalten, das schließlich in einen Sendeverstärker eingespeist wird, der das verstärkte Signal einer Antenne zuführt, die das Signal schließlich abstrahlt.

Bei Rundfunkanwendungen kommen typischerweise aufgrund der hohen Leistungsanforderungen am Ausgang des Verstärkers Röhrenverstärker, wie z. B. Klystrone oder wanderfeldröhren, zur Anwendung. Falls geringere Leistungen genügen, wie z. B. im Mobilfunk, wo ein dichtes Netz von Sendern existiert, können auch Transistorverstärker eingesetzt werden.

Sowohl Transistorverstärker als auch Röhrenverstärker haben gemeinsam die Eigenschaft, daß sie nur in einem bestimmten Eingangsleistungsbereich linear sind und zu größer werdenden Eingangsleistungen eine abfallende Ausgangsleistungskurve haben, die schließlich, wenn der Verstärker vollständig in die Sättigung gerät, einen konstanten Verlauf hat. Anders ausgedrückt übt der Verstärker aufgrund seiner nichtlinearen Kennlinie zu höheren Eingangsleistungen hin nichtlineare Verzerrungen auf das Eingangssignal aus.

In Situationen, in denen für eine bestimmte Sendeanwendung ein bestimmtes Frequenzband beispielsweise durch eine staatliche Lizenzierungsbehörde zugeteilt worden ist, bestehen Vorschriften dahingehend, daß das Sendesignal für die spezielle lizenzierte Sendeanwendung lediglich Leistung in einem vorgeschriebenen Band haben darf, jedoch keine bzw. nur eine geringe Leistung außerhalb des zugewiesenen Bandes. Die Leistung außerhalb des zugewiesenen Bandes wird auch als Außerbandstrahlung bezeichnet.

Die nichtlineare Kennlinie des Verstärkers bei höheren Eingangsleistungen führt, wie es bereits erwähnt wurde, zu nichtlinearen Verzerrungen, derart, daß höhere Oberwellen durch den Verstärker erzeugt werden, die nicht mehr im zugewiesenen Band sondern außerhalb des Bands liegen und als Außerbandstrahlung gemessen werden können.

Es ist bekannt, daß diese nichtlinearen Verzerrungen ein relativ weißes Spektrum ergeben. Ist das Eingangssignal in den Verstärker noch bandbegrenzt, wovon beispielsweise bei der OFDM-Modulation auszugehen ist, so besitzt das Ausgangssignal dann Leistung außerhalb dieses Bandes.

Um dies zu vermeiden, d. h. um Vorschriften des Lizenzvergebers für die für Frequenzbänder festgelegten Toleranzschemata einzuhalten, d. h. wieviel Außerbandstrahlung außerhalb des zugeteilten Bands noch akzeptabel ist, sollte die Eingangsspannung in den Verstärker die maximale Eingangsspannung für eine verzerrungsfreie Verstärkung möglichst selten bzw. eigentlich nicht überschreiten. Anders ausgedrückt bedeutet dies, daß die tatsächlich vorhandene maximale Eingangsspannung so gering wie möglich sein sollte. Wenn die maximale Eingangsspannung immer kleiner als die maximale Spannung ist, bei der der Verstärker gerade noch linear arbeitet bzw. nur so wenig nichtlinear verstärkt, daß seine Außerbandstrahlung unterhalb des erlaubten Wertes ist, dann treten nie Verzerrungen auf, die zu einer höheren als erlaubten Außerbandstrahlung führen.

Nachteilig an dem eingangs beschriebenen OFDM-Verfahren ist das typischerweise auftretende große Spitzenleistung-zu-Durchschnittsleistung-Verhältnis, das auch als PAR (PAR = Peak To Average Power Ratio) bezeichnet wird. Anschaulich beschrieben können große Spitzen im Zeitsignal, d. h. im OFDM-Symbol nach der IDFT auftreten, wenn die Belegung der Träger gerade so ungünstig ist, daß sich beispielsweise alle 256 OFDM-Unterträger zu einem bestimmten Zeitpunkt konstruktiv überlagern. Hier wird eine große Signalspitze auftreten, die durchaus 10 bis 20 dB über der mittleren Signalleistung liegen kann. Um dennoch die zulässige Außerbandstrahlung einzuhalten, wird im Sendeverstärker typischerweise eine hohe Leistungsreserve eingehalten, die auch als "Power Back-Off" bezeichnet wird. Anders ausgedrückt wird der Verstärker an einem Arbeitspunkt betrieben, der derart niedrig angesetzt ist, daß auch eine hohe Leistungsspitze noch im linearen Bereich des Verstärkers liegt.

Diese Betriebsart eines Verstärkers ist eine außerordentlich ineffiziente Betriebsart, in der der Verstärker zwar viel Versorgungsleistung benötigt, jedoch nur eine relativ geringe Ausgangsleistung liefert. Die Forderung nach geringer Außerbandstrahlung in Verbindung mit hohen Spitzenwerten im zeitlichen Signal, die nicht nur bei einer OFDM-Modulation auftreten, sondern die auch beispielsweise bei einem Einträger-Verfahren durch einen Impulsformer auftreten, d. h. die allgemein bei einer Filterung auftreten können, führt dazu, daß teuere Verstärker benötigt werden, welche mit viel Leistungsreserve betrieben werden müssen und einen geringen Wirkungsgrad haben. Gerade für kleinere batteriebetriebene Anlagen ist jedoch der Wirkungsgrad ebenfalls ein Punkt, der insbesondere in Hinblick auf den Mobilfunk und dort verwendete Akkus mit begrenzter Speicherkapazität immer größere Beachtung findet.

Die WO 98/10567 A1 bezieht sich auf ein Verfahren zur Reduktion des Spitzenwertfaktors bei digitalen Übertragungsverfahren. Der grundsätzliche Gedanke besteht darin, bereits auf digitaler Seite Vorkehrungen zu treffen, daß im Zeitsignal keine so hohen Signalspitzen auftreten, so daß geringere Leistungsreserven für die Sendeverstärker ausreichen, ohne daß eine größer als zulässige Außerbandstrahlung auftritt. Das bekannte Konzept wird allgemein als Selected Mapping bezeichnet. Selected Mapping oder SLM bedeutet eigentlich lediglich, daß aus einer zu übertragenden Botschaft, d. h. einem Informationswort oder allgemeiner gesagt einem Vektor aus Datenbits auf wie auch immer geartete Art und Weise U unterschiedliche mögliche Signale erzeugt werden, die auch als Repräsentanten oder Kandidaten-Sendesequenzen bezeichnet werden können. Diese Signale werden jedoch nicht alle übertragen. Stattdessen wird ein spezielles Signal als Sendesignal ausgewählt. Insbesondere besitzt jedes Sendesignal einen Spitzenwert, der gemessen wird. Das Kandidaten-Sendesignal mit niedrigsten Spitzenwert wird schließlich als tatsächliches Sendesignal ausgewählt und übertragen.

Empfängerseitig besteht nun die Aufgabe herauszufinden, (a) welche Botschaft vorliegt, und (b) welcher der U möglichen Repräsentanten pro Botschaft übertragen wurde. Der Empfänger hat zwei Möglichkeiten, dies herauszufinden. Erstens mittels Seiteninformationen, die dem Empfänger vom Sender auf irgendeine Art und Weise mitgeteilt werden, und die sich darauf beziehen, welche der U Kandidaten-Sendesequenzen ausgewählt wurde. Nachteilig bei diesem Verfahren ist eine explizite Übertragung dieser Seiteninformationen, und insbesondere die Tatsache, daß diese Seiteninformationen besonders gut gegen Übertragungsfehler geschützt werden müssen. Dies ist im Falle einer digitalen Rundfunkübertragung, wo der Kanal auf beliebige Art und Weise gestört sein kann und daher schlecht vorhersagbar ist, nicht trivial.

Werden die Seiteninformationen falsch empfangen, dann kann auch das Empfangssignal nicht mehr fehlerfrei verarbeitet werden. Diese Tatsache führt dazu, daß diese Möglichkeit der Signalisierung mittels Seiteninformationen relativ unhandlich ist.

Eine andere Möglichkeit besteht darin, das Konzept ohne Übertragung von Seiteninformationen durchzuführen. Der Empfänger muß dann allein anhand des Empfangssignals herausfinden, welche Botschaft von M Botschaften, d. h. welches Modulationssymbol aus einer festgelegten Anzahl von Modulationssymbolen, vorliegt, und welche der U Kandidaten-Sendesequenzen pro Botschaft gesendet wurde. Statt M möglicher Sendesignale oder Modulationssymbole, aus denen der Empfänger das wahrscheinlichste herauszusuchen hat, müssen nun, wenn keine Seiteninformationen verwendet werden, M · U mögliche Sendesignale betrachtet werden. Dadurch kann sich die Fehlerwahrscheinlichkeit unter Umständen beträchtlich erhöhen. Außerdem ist eine geeignete Auswahl der U möglichen Kandidaten-Sendesequenzen pro Botschaft ein nicht triviales Problem. Bisher mangelte es an einer günstigen Lösung hierzu, so daß auch die Übertragung ohne explizite Seiteninformationen bisher noch nicht praxisreif ist.

Eine spezielle Ausformung von SLM, die ebenfalls in der WO 98/10567 A1 beschrieben ist, wird als PTS-Konzept (PTS = Partial Transmit Sequences) bezeichnet. Die U Kandidaten-Sendesequenzen werden folgendermaßen erhalten. Das Sendesignal liegt vor einer abschließenden linearen Filterung, beispielsweise einer Spektralformung bei Einträger-Verfahren oder einer inversen Fourier-Transformation bei OFDM, zeitdiskret vor, d. h. als Vektor von komplexwertigen Elementen. Der Vektor wird nun in Untermengen, also in Partial Transmit Sequences partitioniert. Für jede Untermenge können dann deren Elemente mit derselben komplexen Zahl mit Betrag 1 multipliziert werden. Diese Elemente werden in der komplexen Ebene alle um denselben Winkel gedreht. Nun erfolgt die abschließende lineare Filterung, durch die typischerweise erst die hohen Spitzenwerte erzeugt werden. Durch die freie Wahl der komplexen Zahl, die zur Multiplikation verwendet wird, kann nun die Mehrzahl von Kandidaten-Sendesequenzen erzeugt werden. Auch hier bestehen die beiden Möglichkeiten, wie sie oben ausgeführt worden sind, nämlich ob mit oder ohne Seiteninformationen gearbeitet wird. Der Unterschied ist aber hier, daß ohne die Übertragung expliziter Seiteninformationen gearbeitet werden kann. Dies ist dadurch möglich, daß die zu übertragenden Informationen nicht absolut in den komplexwertigen Elementen des zeitdiskreten Sendesignals übertragen werden, sondern in Quotienten von aufeinanderfolgenden Elementen derselben Untermenge. Dieses Konzept wird allgemein als differentielle Vorcodierung bezeichnet. Da alle Elemente einer Untermenge mit derselben komplexen Zahl multipliziert worden sind, bleibt der Quotient von zwei aufeinanderfolgenden Elementen derselben Untermenge für jede der U Kandidaten-Sendesequenzen gleich. Der Empfänger muß dementsprechend nur diese Quotienten berechnen und erhält so die übertragenen Informationen zurück.

Nachteilig an dem allgemeinen SLM-Konzept ist die Tatsache, daß es in seiner bisherigen bekannten Form eigentlich nur praktikabel ist, wenn Seiteninformationen mit übertragen werden. Dies ist jedoch aufgrund der Tatsache, daß die Seiteninformationen besonders geschützt werden müssen, kritisch.

Das PTS-Konzept kommt zwar ohne Übertragung von Seiteninformationen aus, hat jedoch den Nachteil, daß es nur für den Fall der differentiellen Vorcodierung praktikabel ist. Das PTS-Konzept schränkt somit die Entwurfsmöglichkeiten für digitale Nachrichtensender und digitale Nachrichtenempfänger erheblich ein.

Weiterhin sind im Empfänger Vorkehrungen zu treffen, um eine leistungseffiziente Differenz-Decodierung durchzuführen. Ein Empfänger muß daher erheblich modifiziert werden, was zu teuren Empfängern führen kann. Gerade auf dem Gebiet der digitalen Rundfunkempfänger ist jedoch der Preis für die Empfänger, die ja ein Massenprodukt sind, ein wesentliches Merkmal, da bereits kleine Preisvorteile auf Consumer-Märkten ausschlaggebend sein können, daß ein Produkt am Markt besteht, während ein anderes Produkt nicht besteht.

Die Facheröffentlichung "Peak to Average Power Reduction for OFDM Schemas by Selective Scrambling" von Van Eetvelt u.a., Electronics Letters, Bd. 32, Nr. 21, 1996, offenbart ein Verfahren zum Reduzieren des Spitzenwertfaktors für OFDM-Schemen durch ein selektives Scrambling. Ein Satz von Nachrichtenbits wird mit vier voneinander unterschiedlichen festen zyklisch nicht-äquivalenten m-Sequenzen gescrambelt, um vier voneinander unterschiedliche Bitströme zu bilden, die alle dieselben Nachrichtenbits darstellen. Daraufhin wird jedem dieser Bitströme ein anderes Bitpaar, d.h. 00, 01, 10 oder 11, vorangestellt. Die Sequenzen der QPSK-Symbole werden dann definiert durch Umwandeln von Codewort-Bitpaaren in eine komplexe bipolare Form. Die günstigste QPSK-Symbolsequenz wird zur Übertragung ausgewählt.

Die DE 196 25 054 A1 offenbart ein Verfahren und System zur Übertragung von Mehrträgersignalen mit einem reduzierten Spitzen/Mittelwert-Verhältnis. Zur Reduzierung der Spitzenleistung werden die einem Mehrträgersignal zugeordneten Träger auf mehrere Blöcke gleicher Länge verteilt. Jedem Symbol einer ein- oder zweidimensionalen Symbolmenge, mit dem jeweils ein Träger des Mehrträgersignals moduliert wird, wird eine vorbestimmte m-stellige Nummmer zugeordnet. Die Symbolnummern werden derart modifiziert, daß das Spitzen/Mittelwert-Verhältnis des zu übertragenden Mehrträgersignals im Zeitbereich verringert wird.

Die WO 00/72543 A1, die am 30. November 2000 veröffentlicht worden ist, offenbart ein Sendesystem mit einem Sender und einem Empfänger. Um den Crest-Faktor eines Multi-Träger-Signals zu reduzieren, umfaßt der Sender einen Generator, der für jedes Datenwort eine Anzahl von Alternativsequenzen erzeugt, indem gegenseitig unterschiedliche digitale Worte mit dem Datenwort kombiniert werden, und eine Auswahleinrichtung, um die Alternativsequenz mit dem niedrigsten speziellen Leistungswert zur Übertragung zu einem Empfänger auszuwählen.

Die nachveröffentlichte WO 00/72543 A1 offenbart einen Generator zur Erzeugung verschiedener Zwischensequenzen durch Kombinieren unterschiedlicher digitaler Wörter mit einem zu übertragenden Datenwort. Dem Generator nachgeschaltet befindet sich eine Auswahlvorrichtung zum Auswählen einer Alternativsequenz mit dem niedrigsten Spitzenleistungswert. Diese Alternativsequenz wird dann kodiert, interleaved, moduliert und dann mittels einer inversen diskreten Fourier-Transformation in den Zeitbereich transformiert. Die erhaltene zeitliche Sequenz wird später digital/analog gewandelt und gesendet.

Die Aufgabe der vorliegenden Erfindung besteht darin, eine praktikable Lösung für das Problem der Außerbandstrahlung zu liefern.

Diese Aufgabe wird durch eine Vorrichtung zum Erzeugen einer Sendesequenz nach Patentanspruch 1 oder 2, durch eine Vorrichtung zum Ermitteln eines Informationsworts nach Patentanspruch 17, durch ein Verfahren zum Erzeugen einer Sendesequenz nach Patentanspruch 21 oder 22 sowie durch ein Verfahren zum Ermitteln eines Informationsworts nach Patentanspruch 23 gelöst.

Der vorliegenden Erfindung liegt die Erkenntnis zugrunde, daß das Problem der Außerbandstrahlung durch eine spezielle Erzeugung der Kandidaten-Sendesequenzen überwunden werden kann. Erfindungsgemäß wird zur Erzeugung der Kandidaten-Sendesequenzen ein invertierbarer rückgekoppelter Kombinationsalgorithmus eingesetzt, der jedoch nicht nur das Informationswort verarbeitet, aus dem eine Mehrzahl von Kandidaten-Sendesequenzen erzeugt wird, die alle die gleiche Information wie das zugrunde liegende Informationswort tragen, sondern daß zusätzlich zusammen mit dem Informationswort ein Etikett ebenfalls durch den rückgekoppelten Kombinationsalgorithmus verarbeitet wird, wobei die einzelnen Kandidaten-Sendesequenzen durch das bei der Erzeugung derselben verwendete Etikett eindeutig identifiziert sind. Rückgekoppelte Kombinationsalgorithmen haben die Eigenschaft, daß sie abhängig von verschiedenen Anfangszuständen im Rückkopplungszweig des Kombinationsalgorithmus unterschiedliche Ausgangswerte liefern.

Anders ausgedrückt werden komplett unterschiedliche Ausgangsvektoren bei gleichen Eingangswerten durch denselben Kombinationsalgorithmus erhalten, wobei die unterschiedlichen Ausgangsvektoren allein dadurch erzeugt werden, daß der Kombinationsalgorithmus mit Rückkopplung jeweils unterschiedliche Zustände aufgrund der Etiketten einnimmt. Stehen die Etiketten als Präfix am Anfang des Informationswort, so wird das Informationswort ausgehend von einem durch das Etikett bestimmten Startzustand des Kombinationsalgorithmus verarbeitet. Steht das Etikett irgendwo in dem Informationswort, so werden sich die Kandidaten-Sendesequenzen bis zum Etikett nicht unterscheiden. Sobald das unterschiedliche Etikett in den Kombinationsalgorithmus läuft, findet gewissermaßen eine "Verzweigung" im Kombinationsalgorithmus statt, durch die dann die unterschiedlichen Kandidaten-Sendesequenzen entstehen. Wenn berücksichtigt wird, daß meistens ein Interleaver eingesetzt wird, der ohnehin eine Verwürfelung durchführt, so wird deutlich, daß es letztendlich unerheblich ist, ob die Kandidaten-Sendesequenzen vor dem Interleaver in einem Anfangsabschnitt identisch sind und erst in einem Endabschnitt unterschiedlich sind.

Das Etikett wird dem Informationswort selbst hinzugefügt, so daß sowohl das Informationswort als auch das Etikett durch den rückgekoppelten Kombinationsalgorithmus verarbeitet werden, derart, daß das Etikett in jeder Kandidaten-Sendesequenz gewissermaßen implizit enthalten ist.

In anderen Worten ausgedrückt werden die Etiketten somit verwendet, um den invertierbaren rückgekoppelten Kombinationsalgorithmus in einen Zustand zu treiben, wobei die Anzahl der Zustände, in die der rückgekoppelte Kombinationsalgorithmus und somit das Gedächtnis des Kombinationsalgorithmus getrieben werden kann, von den Eigenschaften des Rückkopplungszweigs abhängt. Derart, daß jede Kandidaten-Sendesequenz ein anderes Etikett enthält, wird jede Kandidaten-Sendesequenz gewissermaßen ausgehend von einem anderen Zustand aus durch den rückgekoppelten Kombinationsalgorithmus verarbeitet. Das Etikett in der Kandidaten-Sendesequenz ist jedoch nicht mehr explizit ersichtlich. Es kommt erst wieder zum Vorschein, wenn die entsprechende Kandidaten-Sendesequenz im Sender einer Verarbeitung durch einen Algorithmus unterzogen worden ist, der zum Algorithmus im Empfänger invers ist und somit eine Vorwärtskopplungs-Eigenschaft hat.

Nach der Verarbeitung durch den invertierten rückgekoppelten Kombinationsalgorithmus im Empfänger wird das Etikett, obwohl es hier explizit vorliegt, nicht mehr benötigt, da es seine "Schuldigkeit" gewissermaßen schon getan hat, indem es den zum vorwärtsgekoppelten Kombinationsalgorithmus inversen Algorithmus in seinen entsprechenden Anfangszustand getrieben hat, der der vorliegenden empfangenen Sendesequenz zugrunde liegt.

Ein Vorteil der vorliegenden Erfindung besteht darin, daß keine explizite Übertragung der Seiteninformationen nötig ist. Das Etikett wird zwar in der Kandidaten-Sendesequenz implizit übertragen, muß jedoch nicht besonders geschützt werden. Zudem sei angemerkt, daß üblicherweise eine Kanalcodierung zum Hinzufügen einer Redundanz im Sender sowie eine Interleaving-Operation auf das Informationswort ausgeübt wird, so daß auch das Etikett durch dieselben Maßnahmen wie das Informationswort selbst ohnehin ohne zusätzlichen Aufwand automatisch geschützt wird.

Ein weiterer Vorteil der vorliegenden Erfindung besteht darin, daß durch die Hinzufügung des Etiketts lediglich eine geringe Menge an zusätzlicher Redundanz hinzugefügt wird. Größenmäßig ausgedrückt wird bei einem Konzept, das 16 Repräsentanten benötigt, zu einem Informationswort von z. B. 512 Bits im Falle einer OFDM mit 256 Trägern lediglich eine Redundanz von 4 Bit hinzugefügt, was je nach Anzahl der verwendeten Träger einer zusätzlichen Redundanz von kleiner als 1% entspricht.

Die spektralen Eigenschaften in Hinblick auf die Sendeverstärkernichtlinearitäten werden umso günstiger, je mehr Kandidaten-Sendesequenzen erzeugt werden, d. h. je mehr verschiedene Zustände der rückgekoppelte Kombinationsalgorithmus einnehmen kann. Allgemein werden bereits bei einer Anzahl von 16 verschiedenen Kandidaten-Sendesequenzen derartige Signalstatistikverbesserungen erreicht, daß die Sendeverstärker-Leistungsreserve ohne weiteres um Werte in der Größenordnung von 2 dB reduziert werden kann.

Ein weiterer Vorteil der vorliegenden Erfindung besteht darin, daß sie im Empfänger aufwandsarm implementiert werden kann, robust und somit für die Praxis geeignet ist.

Ein weiterer wesentlicher Vorteil der vorliegenden Erfindung besteht darin, daß das erfindungsgemäße Konzept nicht nur auf eine bzw. auf eine geringe Anzahl von Modulationsarten begrenzt ist, sondern generell für vielfältige Kanalcodierformen und beliebige Modulationsformen geeignet ist. Ein Entwickler hat somit aufgrund der Erzeugung der Kandidaten-Sendesequenzen unter Verwendung eines invertierbaren rückgekoppelten Kombinationsalgorithmus maximale Entwurfsfreiheit bezüglich der verwendeten Modulationsart, bezüglich der verwendeten Kanalcodierung und bezüglich der verwendeten Komponenten im Empfänger.

Bevorzugte Ausführungsbeispiele der vorliegenden Erfindung werden nachfolgend bezugnehmend auf die beiliegenden Zeichnungen detailliert erläutert. Es zeigen:

Fig. 1 ein schematisches Blockschaltbild einer Vorrichtung zum Erzeugen einer Sendesequenz gemäß einem ersten Ausführungsbeispiel der vorliegenden Erfindung;

Fig. 2 ein schematisches Blockschaltbild einer Vorrichtung zum Erzeugen einer Sendesequenz gemäß einem zweiten Ausführungsbeispiel der vorliegenden Erfindung;

Fig. 3 eine Anwendung der in Fig. 1 dargestellten Vorrichtung für eine OFDM-Modulation;

Fig. 4 eine Anwendung der in Fig. 2 gezeigten Vorrichtung für eine OFDM-Modulation;

Fig. 5 ein rückgekoppeltes Schieberegister als Beispiel für eine Implementation des invertierbaren rückgekoppelten Kombinationsalgorithmus;

Fig. 6 ein schematisches Blockschaltbild einer erfindungsgemäßen Vorrichtung zum Ermitteln eines Informationsworts aus einer Sendesequenz in einem digitalen Empfänger;

Fig. 7 eine Anwendung des in Fig. 6 gezeigten Empfängerabschnitts auf einen OFDM-Empfänger;

Fig. 8 ein Beispiel für eine Implementation des zum rückgekoppelten Kombinationsalgorithmus inversen Algorithmus unter Verwendung eines vorwärts-gekoppelten Schieberegister;

Fig. 9 ein Beispiel für einen Redundanz-hinzufügenden Kanalcodierer in Schieberegisterausführung;

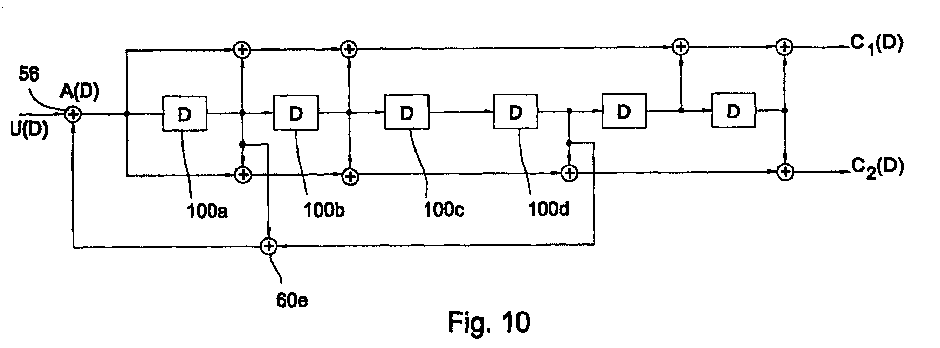

Fig. 10 ein Beispiel für eine günstige Implementation des Kanalcodierers von Fig. 9 und des rückgekoppelten Schieberegisters von Fig. 5 unter gemeinsamer Verwendung bestimmter Verzögerungseinheiten;

Fig. 11 eine schematische Darstellung eines Informationsworts mit Etikett vor dem Verarbeiten durch einen invertierbaren rückgekoppelten Kombinationsalgorithmus.

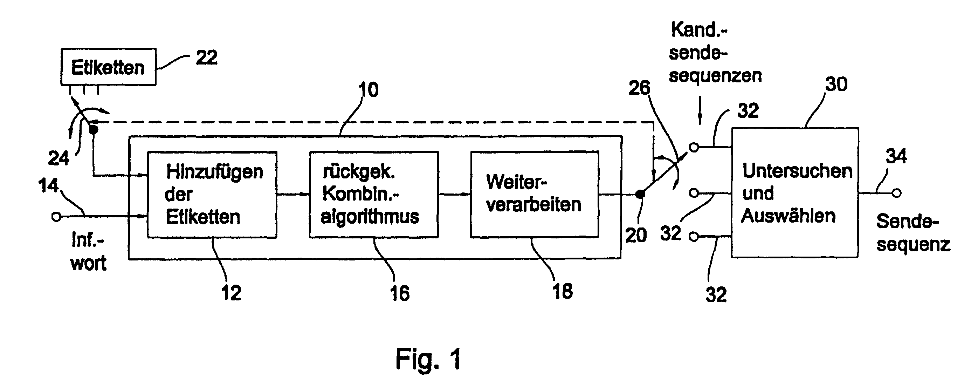

Fig. 1 zeigt eine Vorrichtung zum Erzeugen einer Sendesequenz aus einem Informationswort, das eine Mehrzahl von Informationseinheiten aufweist, gemäß einem ersten Ausführungsbeispiel der vorliegenden Erfindung. Die Vorrichtung gemäß dem ersten Ausführungsbeispiel umfaßt grundsätzlich eine Einrichtung 10 zum Bilden einer Mehrzahl von Kandidaten-Sendesequenzen sowie eine Einrichtung 30 zum Untersuchen der Mehrzahl von Kandidaten-Sendesequenzen und zum Auswählen einer Kandidaten-Sendesequenz aus der Mehrzahl von Kandidaten-Sendesequenzen als tatsächliche Sendesequenz, welche ein vorbestimmtes Kriterium erfüllt.

Die Einrichtung 10 zum Bilden einer Mehrzahl von Kandidaten-Sendesequenzen umfaßt zunächst eine Einrichtung 12 zum Hinzufügen eines Etiketts zu einem Informationswort, das über einen Eingang 14 geliefert wird. Das Informationswort samt Etikett wird dann in eine Einrichtung 16 zum Verarbeiten des Informationsworts samt den hinzugefügten Etiketten durch einen invertierbaren rückgekoppelten Kombinationsalgorithmus eingespeist, um ein kombiniertes Informationswort am Ausgang der Einrichtung 16 zu erhalten, in dem die Informationseinheiten miteinander und/oder mit dem eingefügten Etikett kombiniert sind, derart, daß das kombinierte Informationswort durch das Etikett eindeutig identifiziert ist. Ein derart erzeugtes kombiniertes Informationswort wird dann in eine Einrichtung 18 zum Weiterverarbeiten des kombinierten Informationsworts eingespeist, wobei die Einrichtung 18 zum Weiterverarbeiten derart angeordnet ist, daß eine zeitliche Kandidaten-Sendesequenz aus dem kombinierten Informationswort erzeugt wird. Eine solche Kandidaten-Sendesequenz liegt an einem Ausgang 20 der Einrichtung 10 zum Bilden einer Mehrzahl von Kandidaten-Sendesequenzen an. Die Einrichtung 10 zum Bilden der Mehrzahl von Kandidaten-Sendesequenzen ist ferner derart angeordnet, um nach Fertigstellung einer Kandidaten-Sendesequenz ein neues Etikett von einem Etikettenspeicher 22 mittels eines Etiketten-Schalters 24 zu holen. Gleichzeitig mit dem Etiketten-Schalter 24 wird ein ausgangsseitiger Kandidaten-Sendesequenzenschalter 26 betätigt, um eine neue Kandidaten-Sendesequenz zu einem anderen Eingang 32 der Einrichtung 30 zum Untersuchen und Auswählen zu liefern.

Hat die Einrichtung 30 zum Untersuchen und Auswählen sämtliche Kandidaten-Sendesequenzen erhalten, deren Anzahl typischerweise der Anzahl der zur Verfügung stehenden Etiketten entspricht, so beginnt der Untersuchungs- und Auswahlschritt. Die einzelnen Kandidaten-Sendesequenzen, welche zeitliche Kandidaten-Sendesequenzen sind, werden bezüglich ihrer Signaleigenschaften untersucht, wonach eine Kandidaten-Sendesequenz als Sendesequenz ausgewählt wird, die ein vorbestimmtes Kriterium erfüllt. Für das vorbestimmte Kriterium existieren verschiedene Möglichkeiten, die auch in Kombination angewendet werden können. Es sei in Erinnerung gerufen, daß das grundsätzliche Ziel des erfindungsgemäßen Konzepts darin besteht, auf praktikable und robuste Art und Weise die Leistungs-Reserve im Sendeverstärker zu verringern, ohne daß die Außerbandstrahlung über eine Toleranzgrenze steigt. Die Außerbandstrahlung steigt jedoch über eine Toleranzgrenze, wenn der zum Einsatz kommende HF-Sendeverstärker in seinen nichtlinearen Bereich aufgrund eines zu großen Eingangssignals, d. h. aufgrund eines zu großen zeitlichen Werts, gebracht wird.

Das genaueste Kriterium besteht darin, für jede Kandidaten-Sendesequenz die durch sie erzeugte Außerbandstrahlung unter Kenntnis der Verstärker-Kennlinie zu berechnen und dann die Kandidaten-Sendesequenz als Sendesequenz am Ausgang 34 der Einrichtung 30 zu nehmen, die die geringste Außerbandstrahlung verursacht. In diesem Fall ist das vorbestimmte Kriterium somit die geringste Außerbandstrahlung.

Dieses Verfahren ist jedoch relativ aufwendig. Einfacher, aber ungenauer ist ein Verfahren, bei dem als Kriterium der kleinste Spitzenwert verwendet wird. Hierbei wird jede Kandidaten-Sendesequenz Abtastwert für Abtastwert untersucht, um die Kandidaten-Sendesequenz herauszufinden, die den kleinsten Spitzenwert hat, d. h. wenn komplexe zeitliche Abtastwerte vorliegen, die den kleinsten absoluten Betrag der komplexen Abtastwerte hat.

Ein weiteres Verfahren zum Untersuchen und Auswählen, das bezüglich des Aufwands zwischen den beiden vorgenannten Verfahren liegen wird, besteht darin, die Durchschnittsleistung der einzelnen Kandidaten-Sendesequenzen zu ermitteln und die Kandidaten-Sendesequenz mit der kleinsten Durchschnittsleistung als Sendesequenz auszuwählen. Das letztere Verfahren berücksichtigt den Fall, bei dem allein aufgrund einer Entscheidung nach dem größten Spitzenwert eine ansonsten günstige Kandidaten-Sendesequenz beispielsweise nur aufgrund eines einzigen hohen Spitzenwerts verworfen werden würde, während stattdessen eine Kandidaten-Sendesequenz als Sendesequenz ausgewählt werden würde, die zwar keinen so hohen Spitzenwert hat, aber aufgrund anderer relativ hoher Spitzenwerte dennoch einen beträchtlichen Anteil an Außerbandstrahlung erzeugt.

Bei dem in Fig. 1 gezeigten Konzept wird eine serielle Verarbeitung vorgenommen. Anders ausgedrückt existieren die Einrichtungen 12, 16 und 18 lediglich ein einziges Mal, wobei dieselben seriell mit unterschiedlichen Etiketten und dem gleichen Informationswort bedient werden, um die einzelnen Kandidaten-Sendesequenzen nacheinander zu berechnen. Alternativ können die Einrichtungen 12, 16, 18 vervielfacht werden, um eine parallele Berechnung der Kandidaten-Sendesequenzen zu erhalten, derart, daß in jeden parallelen Zweig ein anderes Etikett eingegeben wird. Auch gemischte Seriell/Parallel-Lösungen sind je nach Wunsch möglich.

Es sei darauf hingewiesen, daß es der Sendeverstärker natürlich mit einem kontinuierlichen zeitlichen Sendesignal nach einer D/A-Wandlung und spezifischen Impulsformung zu tun hat. Daher ist das generelle Konzept des Bildens von Kandidaten-Sendesequenzen und des Auswählens der Kandidaten-Sendesequenz, die ein vorbestimmtes Kriterium erfüllt, am genauesten, wenn tatsächlich das kontinuierliche analoge Zeitsignal vor der Aufwärtsmischung auf den HF-Träger untersucht werden würde. Es hat sich jedoch herausgestellt, daß es eine gute Näherung ist, beispielsweise im Falle eines OFDM-Modulationsverfahrens die diskreten komplexen zeitlichen OFDM-Symbole am Ausgang des IDFT-Blocks zu untersuchen, was den Vorteil hat, daß keine analogen Verarbeitungseinrichtungen bzw. weitere Digital/Analog-Wandler und Analog/Digital-Wandler erforderlich sind, um die Kandidaten-Sendesequenzen bezüglich ihrer Eigenschaften zu analysieren. Wenn jedoch beispielsweise im Falle einer Einträgermodulation ein Impulsformungsfilter mit einer relativ steilen Frequenzantwort in der Übergangsregion eingesetzt wird, dürfte diese Näherung nicht ausreichend sein, und es müssen kontinuierliche zeitliche Kandidaten-Sendesequenzen anstatt von diskreten zeitlichen Kandidaten-Sendesequenzen untersucht werden.

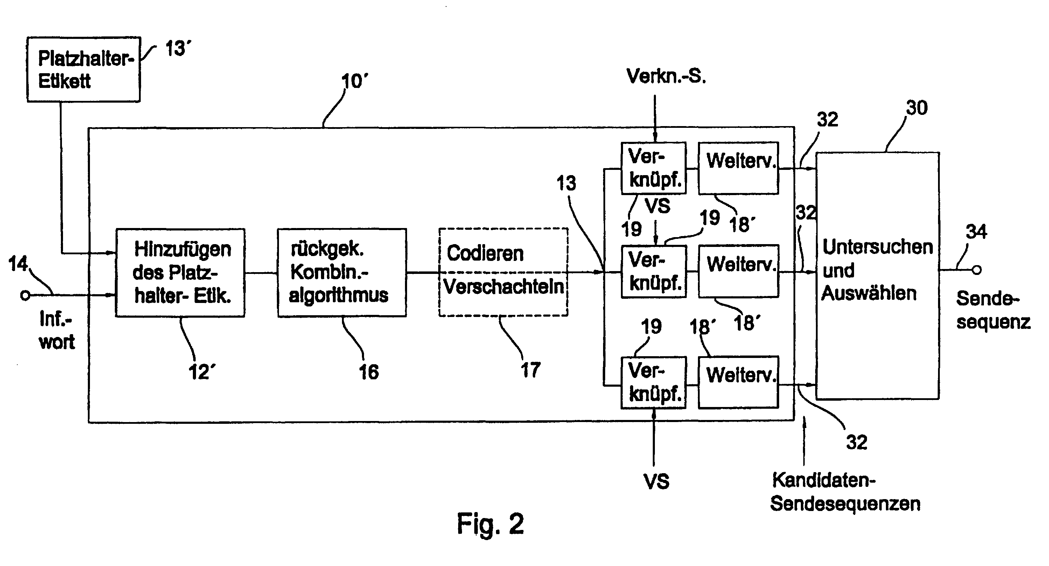

Fig. 2 zeigt eine zu in Fig. 1 äquivalente Implementation einer Vorrichtung zum Erzeugen einer Sendesequenz gemäß einem zweiten Ausführungsbeispiel der vorliegenden Erfindung. Gleiche Bezugszeichen deuten auf gleiche oder ähnliche Elemente hin. Die Vorrichtung gemäß dem zweiten Ausführungsbeispiel der vorliegenden Erfindung umfaßt ebenfalls eine Einrichtung 10' zum Bilden der Mehrzahl von Kandidaten-Sendesequenzen sowie eine Einrichtung 30 zum Untersuchen und Auswählen, um die Sendesequenz ausgangsseitig zu liefern. Die Einrichtung 30 hat wiederum einen Ausgang 34, an dem die Sendesequenz ausgegeben wird, sowie eine Anzahl von Eingängen 32, wobei die Anzahl der Eingänge der Anzahl der Kandidaten-Sendesequenzen entsprechen wird.

Die Einrichtung 10' zum Bilden der Mehrzahl von Kandidaten-Sendesequenzen hat einen Eingang 14, an dem das zu verarbeitende Informationswort einzuspeisen ist, aus dem die Mehrzahl von Kandidaten-Sendesequenzen an den Ausgängen 32 der Einrichtung 10' erzeugt werden sollen.

Im Gegensatz zu dem in Fig. 1 gezeigten ersten Ausführungsbeispiel findet nun jedoch die Verbindung des Informationsworts mit dem Etikett gewissermaßen zweistufig statt, derart, daß durch eine Einrichtung 12' zum Hinzufügen eines Platzhalter-Etiketts lediglich ein Platzhalteretikett von einem Platzhalter-Etikettenspeicher 13' geliefert wird. Das Informationswort samt Platzhalteretikett wird dann in einer Einrichtung 16 zum Durchführen eines invertierbaren rückgekoppelten Kombinationsalgorithmus wie im Fall von Fig. 1 verarbeitet, um ein kombiniertes Informationswort zu erhalten, in dem die Informationseinheiten des Informationsworts miteinander und/oder mit dem eingefügten Platzhalteretikett kombiniert sind. Lediglich optional ist der Einrichtung 16 eine Einrichtung zum Kanal-Codieren und/oder zum Interleaven, d. h. Verschachteln, die allgemein mit dem Bezugszeichen 17 bezeichnet ist, nachgeschaltet. Ist die Einrichtung 17, die grundsätzlich optional ist, nicht vorhanden, so wird das kombinierte Informationswort in eine Anzahl von Verknüpfungseinrichtungen 19 eingespeist. Ist dagegen die Einrichtung 17 vorhanden, so wird nicht das kombinierte Informationswort sondern ein von dem kombinierten Informationswort abgeleitetes Wort in die Verknüpfungseinrichtungen 19 eingespeist, wobei die Ableitungsvorschrift den Verarbeitungsvorschriften des Blocks 17 entspricht.

In den Einrichtungen 19 zum Verknüpfen wird das kombinierte Informationswort, das lediglich - implizit - ein Platzhalteretikett enthält, mit unterschiedlichen Verknüpfungssequenzen z. B. durch eine bitweise XOR-Operation verknüpft, um eine verknüpftes Informationswort zu erhalten, das durch das jeweilige Etikett eindeutig identifiziert ist. Die einzelnen Verknüpfungssequenzen (VS) werden derart gebildet, daß ein Etikett, wie es in der Einrichtung 22 von Fig. 1 vorliegt, genommen wird und derselben Verarbeitung wie das Informationswort am Eingang 14 von Fig. 2 unterzogen wird, derart, daß die Verknüpfungssequenz das verarbeitete Etikett ist. Durch die Verknüpfung mit dem jeweiligen verarbeiteten Etikett werden somit die tatsächlichen Informationen des Etiketts anstelle des Platzhalter-Etiketts eingetragen, so daß sich am Ausgang der Verknüpfungseinrichtungen 19 die unterschiedlichen Kandidaten-Sendesequenzen ergeben. Diese werden schließlich in jeweilige optional von Zweig zu Zweig identische Weiterverarbeitungseinrichtungen 18' eingespeist, um wieder zeitliche Kandidaten-Sendesequenzen zu erhalten, welche, wie es oben beschrieben worden ist, entweder zeitdiskrete Kandidaten-Sendesequenzen wie im Falle einer OFDM-Modulation oder impulsgeformte zeitkontinuierliche Sendesequenzen sein können, wie im Falle einer Einträgermodulation mit Impulsformungsfilter. Das in Fig. 2 dargestellte erfindungsgemäße Konzept hat den Vorteil, daß während des tatsächlichen Betriebs die Einrichtungen 12, 16 und optional 17 lediglich einmal durchlaufen werden müssen, um das kombinierte Informationswort oder das von dem kombinierten Informationswort abgeleitete Wort zu erzeugen, das dann an einem Verteilerpunkt 13 auf die unterschiedlichen Verknüpfungseinrichtungen verteilt wird. Bei dem in Fig. 2 gezeigten zweiten Ausführungsbeispiel der vorliegenden Erfindung wird eigentlich wie beim ersten Ausführungsbeispiel auch das Etikett der Verarbeitung durch die Einrichtungen 12, 16 und optional 17 unterzogen, jedoch muß dies nicht während des tatsächlichen Sendens geschehen, sondern kann gewissermaßen "Off-line" durchgeführt werden. Vorteilhafterweise können somit die Verknüpfungs-Sequenzen außerhalb des tatsächlichen Betriebs berechnet werden und beispielsweise in einem ROM-Speicher abgespeichert werden, so daß die einzelnen Verknüpfungssequenzen, deren Anzahl der Anzahl der Etiketten und somit der Anzahl der unterschiedlichen Kandidaten-Sendesequenzen entspricht, während des Betriebs des digitalen Senders lediglich abgerufen werden müssen. Damit ist ein schneller Betrieb möglich.

Das in Fig. 2 gezeigte zweite Ausführungsbeispiel der vorliegenden Erfindung ermöglicht ebenfalls wieder eine rein serielle, eine rein parallele oder eine gemischte Seriell/Parallel-Verarbeitung, um die Mehrzahl von Kandidaten-Sequenzen zu berechnen. Wird eine rein serielle Verarbeitung verwendet, so sind nur eine einzige Einrichtung 19 und eine einzige Einrichtung 18' vorhanden, wobei immer nach Berechnen einer Kandidatensequenz eine neue Verknüpfungs-Sequenz in die einzige Einrichtung 19 eingespeist wird, um so nacheinander die einzelnen Kandidaten-Sendesequenzen zu berechnen. Je nach Weiterverarbeitungs-Funktionalität wird ein Kompromiß darin bestehen, ob diese Operationen aufwendig sind und somit besser seriell ausgeführt werden sollten oder aber nicht aufwendig sind und parallel implementiert werden können, wodurch für jeden Anwendungsfall immer ein optimaler Kompromiß gefunden werden kann, der sich letztendlich, wenn an die Integration der gesamten in Fig. 1 und Fig. 2 gezeigten Funktionalität auf einem Anwendungs-spezifischen integrierten Schaltkreis gedacht wird, in einem Kompromiß zwischen Chipfläche, Leistungsverbrauch, Größe, Kosten, usw. erschöpfen wird.

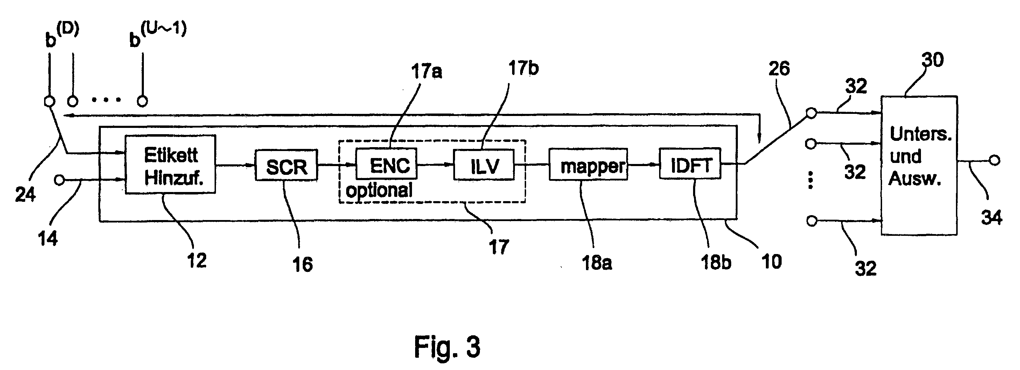

Im nachfolgenden wird auf Fig. 3 eingegangen, welche eine praktische Implementierung des in Fig. 1 allgemein dargestellten ersten Ausführungsbeispiels der vorliegenden Erfindung liefert. Fig. 3 bezieht sich auf das OFDM-Modulationsverfahren, das aufgrund der inversen diskreten Fouriertransformation, um aus einem Informationswort ein zeitliches OFDM-Symbol zu erzeugen, allgemein ein sehr hohes PAR besitzt. Allgemein werden beim OFDM-Verfahren eine bestimmte Anzahl von orthogonalen Unterträgern mit gleichmäßiger Beabstandung hinsichtlich der Frequenz verwendet. Das Frequenzmultiplex-Verfahren wird durch eine inverse diskrete Fourier-Transformation im Sender implementiert. Binäre Daten werden allgemein auf Unterträger-Amplituden entsprechend einem Modulationsverfahren, wie z. B. QPSK oder QAM, abgebildet. OFDM kann entweder derart verwendet werden, daß jeder Unterträger dieselbe Signalkonstellation erhält oder aber bestimmte Unterträger unterschiedliche Signalkonstellationen erhalten. So könnten einige Unterträger beispielsweise QPSK-moduliert sein, während die anderen Unterträger beispielsweise 16-QAM-moduliert sein könnten.

Der Vektor der Unterträger, d. h. eigentlich der Vektor der auf die einzelnen Unterträger modulierten Modulationssymbole, wird dann durch eine IDFT in den zeitbereich transformiert, um ein OFDM-Symbol zu erhalten, das aus einer durch die Transformation festgelegten Anzahl von zeitlichen Abtastwerten besteht. Die Abtastwerte können dann mittels einer üblichen Pulsamplitudenmodulation in ein kontinuierliches Zeitsignal umgeformt werden, um dann nach Umsetzung auf eine HF-Trägerfrequenz im Sendeverstärker verstärkt zu werden.

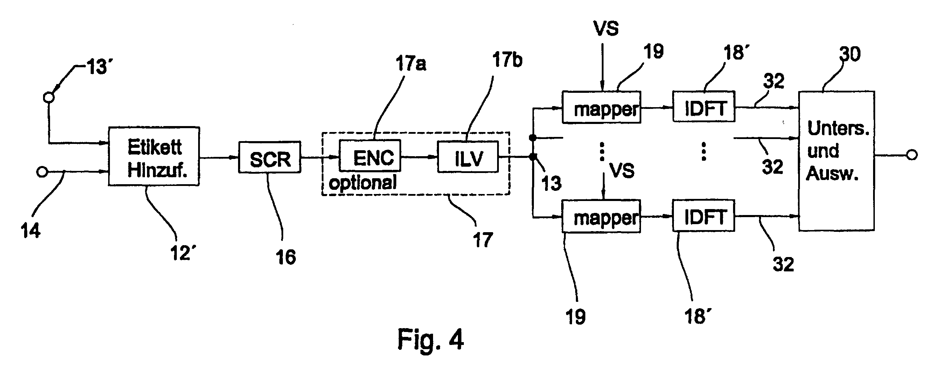

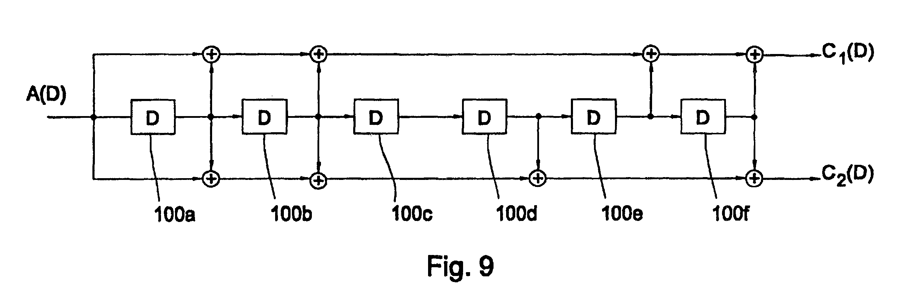

Im nachfolgenden wird auf Fig. 3 eingegangen. Gleiche Elemente wie in Fig. 1 haben die gleichen Bezugszeichen. Es sei darauf hingewiesen, daß die Einrichtung 16 zum Durchführen des invertierbaren rückgekoppelten Kombinationsalgorithmus in Fig. 3 und in Fig. 4 als Scrambler bezeichnet wird, um auf die bevorzugte Implementation des invertierbaren rückgekoppelten Kombinationsalgorithmus unter Verwendung eines binären Schieberegister hinzuweisen. Dem Scrambler 16 nachgeschaltet befindet sich in Fig. 3 eine optionale Gruppe von Funktionsblöcken, die mit dem Bezugszeichen 17 bezeichnet ist. Die Gruppe 17 von Funktionsblöcken umfaßt einen Redundanz-hinzufügenden Kanal-Codierer 17a, der mit ENC (ENC = Encoder) bezeichnet ist, dem ein Interleaver, der mit ILV bezeichnet ist und das Bezugszeichen 17b trägt, nachgeschaltet ist. Es kann auch entweder nur der Codierer 17a oder nur der Interleaver 17b vorhanden sein. Der Kanal-Codierer ist beispielsweise ein FEC-Codierer (FEC = Forward Error Correction), der gemäß einer bestimmten Coderate kleiner als Eins dem gescrambelten Informationswort Redundanz hinzufügt. Typischerweise werden solche FEC-Codierer unter Verwendung eines vorwärts-gekoppelten binären Schieberegisters gebildet, das aus Verzögerungseinheiten und XOR-Verknüpfungen besteht, wie es noch bezugnehmend auf Fig. 9 detailliert erläutert wird.

Das Kanal-codierte und einer Interleaving-Operation unterzogene verarbeitete Informationswort wird dann einem Mapper 18a zugeführt, der einerseites eine Seriell/Parallel-Wandlung und andererseits eine Abbildung von Bits des Interleaver-Ausgangssignals entsprechend der Signalkonstellation, d. h. des Modulationsverfahrens, durchführt. Wird eine QPSK-Modulation für alle Unterträger verwendet, so führt der Mapper 18a zunächst eine Gruppierung des Informationsworts in 2-Bit-Gruppen, die auch als Dibits bezeichnet werden, wobei den vier möglichen Dibit-Kombinationen vier Phasenzustände in der komplexen Ebene zugeordnet sind. Dazu führt der Mapper 18a eine Serien/Parallel-Wandlung der Dibits durch, um einen Vektor von Dibits zu erzeugen, welcher der IDFT-Operation im Block 18b unterzogen werden kann. Am Ausgang des IDFT-Blocks liegt dann ein OFDM-Symbol vor, das aus einer Folge von diskreten zeitlichen Abtastwerten besteht. Bei dem hier beschriebenen Ausführungsbeispiel findet vor dem Untersuchen und Auswählen im Block 30 keine Umwandlung in ein zeitkontinuierliches Signal statt, da das durch die IDFT-Operation bewirkte lineare Filtern den maßgeblichen Anteil an hohen Spitzenwerten im OFDM-Symbol hat.

Das in Fig. 4 gezeigte Ausführungsbeispiel bezieht sich auf eine OFDM-Anwendung des in Fig. 2 gezeigten zweiten Ausführungsbeispiels der vorliegenden Erfindung. Im Unterschied zu dem in Fig. 3 gezeigten Ausführungsbeispiel wird dem Informationswort am Eingang 14 nicht mehr nacheinander oder parallel ein unterschiedliches Etikett zugeordnet, sondern lediglich ein einziges Platzhalter-Etikett 13'. Das mit dem Platzhalteretikett versehene Informationswort wird dann wieder gescrambelt und optional codiert und verschachtelt, um dann an einem Verzweigungspunkt 13 auf die Mapper 19 gelegt zu werden, welche zum einen die Dibit-Bildung und zum anderen die Seriell/Parallel-Wandlung der Dibits durchführen, und welche aber auch die Verknüpfungsoperation, die bezugnehmend auf Fig. 2 beschrieben wurde, durchführen. Bei dem in Fig. 4 gezeigten zweiten Ausführungsbeispiel der vorliegenden Erfindung in seiner OFDM-Anwendung muß nur ein einziges verschachteltes Codewort erzeugt werden. Aufgrund einer Linearität im Zahlenkörper Galois Feld der Mächtigkeit 2 (GF(2)) des invertierbaren rückgekoppelten Kombinationsalgorithmus, des Codierers und des Interleavers kann das Scrambeln des Informationsworts samt Platzhalteretikett von dem tatsächlichen Scrambeln der unterschiedlichen Etiketten getrennt werden, so daß die gescrambelten und optional codierten und verschachtelten Etiketten den Mappern 19 als Verknüpfungssequenzen hinzugefügt werden können, derart, daß die einzelnen Kandidaten-Sendesequenzen eindeutig durch die den entsprechenden Verknüpfungssequenzen zugrunde liegenden Etiketten identifiziert sind. Es sei darauf hingewiesen, daß die Verknüpfungssequenzen nur einmal und vorzugsweise "Off-line" berechnet werden müssen und in einem ROM-Speicher abgespeichert werden können, derart, daß das in Fig. 4 gezeigte Ausführungsbeispiel der vorliegenden Erfindung schnell berechnet werden kann. Die verknüpften Informationsworte am Ausgang eines Mappers 19 werden dann unter Verwendung eines IDFT-Blocks 18' weiterverarbeitet, derart, daß eine zeitliche Kandidaten-Sendesequenz erzeugt wird, welche dann in die Einrichtung 30 zum Untersuchen und Auswählen eingespeist wird.

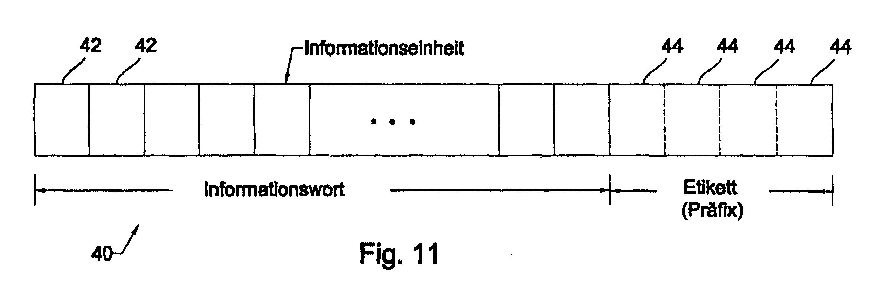

Im nachfolgenden wird auf Fig. 11 eingegangen, um den Aufbau eines Informationsworts zu erläutern. Ein Informationswort 40, wie es am Eingang 14 in die Vorrichtung zum Erzeugen einer Sendesequenz eingespeist wird, besteht aus einer Mehrzahl von einzelnen Informationseinheiten 42, welche im Falle einer binären Ausgestaltung einzelne Bits sind. Gemäß einem bevorzugten Ausführungsbeispiel der vorliegenden Erfindung wird durch die Einrichtung 12 bzw. 12' zum Hinzufügen eines Etiketts (Fig. 1 bis Fig. 4) dem Informationswort 40 entweder ein tatsächliches Etikett oder ein Platzhalteretikett vorangestellt. Es sei darauf hingewiesen, daß das Platzhalteretikett die gleiche Länge hat wie ein tatsächliches Etikett. Typischerweise besteht das Etikett und somit auch das Platzhalter-Etikett aus einer Anzahl von einzelnen Bits 44, wobei die Anzahl der Etikettenbits 44 die Anzahl der möglichen Kandidaten-Sendesequenzen bestimmt. Im Falle einer binären Ausgestaltung des erfindungsgemäßen Konzepts können durch vier Etikettenbits bereits 16 Kandidaten eindeutig identifiziert werden. Bei einer einfachen Implementation reicht sogar ein einziges Etikettenbit, mit dem bereits zwei unterschiedliche Kandidaten-Sendesequenzen erzeugt werden können. Der invertierbare rückgekoppelte Kombinationsalgorithmus wird vorzugsweise an das Etikett angepaßt sein, derart, daß sein Gedächtnis so viele verschiedene Zustände einnehmen kann, wie viele verschiedenen Zahlen durch die Anzahl der Etikettenbits dargestellt werden können, d. h. wieviel eindeutig unterscheidbare Kandidaten-Sendesequenzen erzeugt werden können.

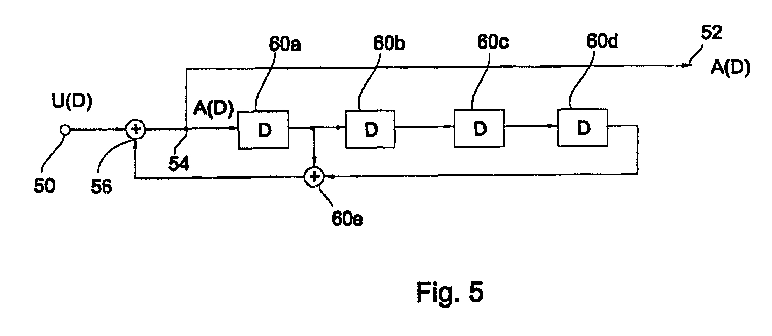

Im nachfolgenden wird auf Fig. 5 eingegangen, welche eine beispielhafte Implementation des invertierbaren rückgekoppelten Kombinationsalgorithmus darstellt. Der invertierbare rückgekoppelte Kombinationsalgorithmus kann beispielhaft mittels eines rückgekoppelten Schieberegisters implementiert werden, das eine bestimmte Anzahl von Verzögerungseinheiten aufweist, die in Fig. 5 mit D bezeichnet sind, und das darüberhinaus eine bestimmte Anzahl von XOR-Verknüpfungen umfaßt.

Im einzelnen implementiert das in Fig. 5 gezeigte Schieberegister einen invertierbaren rückgekoppelten Kombinationsalgorithmus, der durch ein Polynom $1+D+D^4$ bezeichnet werden kann, wobei das Zeichen "+" für eine XOR-Verknüpfung, die auch als Exklusiv-ODER-Operation bezeichnet wird, steht. Eine XOR-Verknüpfung hat bekannterweise folgende Eigenschaft:

$$0 + 0 = 0$$
$$0 + 1 = 1$$
$$1 + 0 = 1$$
$$1 + 1 = 0$$

Allgemein kann gesagt werden, daß ein Scrambler, der den invertierbaren rückgekoppelten Kombinationsalgorithmus ausführt, ein rückgekoppeltes binäres Schieberegister sein kann, das starke Ähnlichkeiten zu einem digitalen Filter hat. Jedes Verzögerungselement D speichert im Falle einer binären Implementation ein Bit, das entweder einen Wert von 0 oder einen Wert von 1 hat, und gibt dieses dann im nächsten Zeitschritt zum nächsten Verzögerungselement weiter, falls ein solches vorhanden ist. Es sei angemerkt, daß D beim binären Schieberegister für $z^{-1}$ bei digitalen Filtern steht, wo dann die Signalfolge als $A(z)$ bezeichnet werden würde, während hier von einer Signalfolge $A(D)$ gesprochen wird.

Im einzelnen umfaßt das in Fig. 5 dargestellte beispielhafte Schieberegister einen Eingang 50 und einen Ausgang 52. Am Eingang liegt die binäre Eingangsfolge $U(D)$ an, welche das Informationswort samt Etikett ist. Am Ausgang liegt das kombinierte Informationswort $A(D)$ an. Das in Fig. 5 gezeigte Schieberegister umfaßt einen Rückkopplungszweig, der an einem Ende 54 mit dem Ausgang verbunden ist, und der an seinem anderen Ende 56 mit einem der beiden Eingänge einer XOR-Verknüpfung verbunden ist, die mit ihrem anderen Eingang mit dem Eingang 50 des Schieberegisters verbunden ist. Der Rückkopplungszweig umfaßt bei dem in Fig. 5 gezeigten Beispiel für ein Schieberegister ein erstes Verzögerungselement 60a, ein zweites Verzögerungselement 60b, ein drittes Verzögerungselement 60c und ein viertes Verzögerungselement 60d und ferner eine XOR-Verknüpfung 60e, die den Ausgangswert der ersten Verzögerungseinrichtung 60a mit dem Ausgangswert der vierten Verzögerungseinrichtung 60d XOR-verknüpft, um das Signal an dem zweiten Ende 56 des Rückkopplungszweigs zu erzeugen. Analog zu einem digitalen Filter läßt sich auch bei einem binären Schieberegister der Rückkopplungszweig mittels eines Polynoms ausdrücken. Da bei dem hier gezeigten Ausführungsbeispiel Abzweigungen nach dem ersten und dem vierten D-Element vorhanden sind, gilt:

$$A(D) = U(D) + D \cdot A(D) + D^4 \cdot A(D)$$

woraus sich folgende Übertragungsfunktion ergibt:

$$A(D)/U(D) = 1/(1 - D - D^4)$$

Das Rückkopplungspolynom kann also durch $1 - D - D^4$ beschrieben werden. Es sei darauf hingewiesen, daß durch ein Schieberegister jedes beliebige Rückkopplungspolynom unter Verwendung von Verzögerungselementen und von XOR-Verknüpfungen erzeugt werden kann. Da sowohl die Verzögerungsoperation als auch die XOR-Operation lineare Operationen in GF(2) sind, ist die "Aufspaltung" der Operation des Schieberegisters möglich, derart, daß bei dem in Fig. 2 gezeigten zweiten Ausführungsbeispiel der vorliegenden Erfindung durch Verarbeiten des mit einem Platzhalter-Etikett versehenen Informationsworts und durch spätere Verknüpfung mit einer Verknüpfungssequenz dasselbe Resultat erreicht wird wie bei dem in Fig. 1 gezeigten ersten Ausführungsbeispiel.

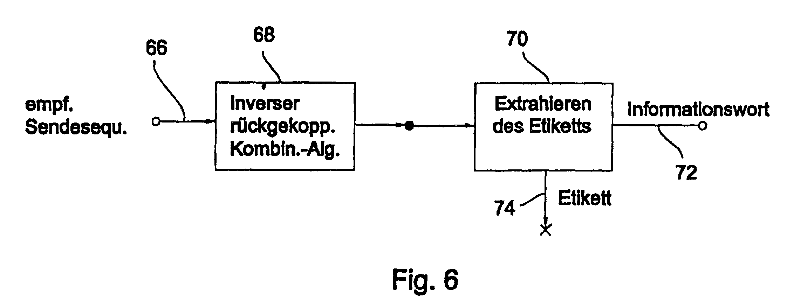

Nachfolgend wird allgemein auf den Betrieb rückgekoppelter binärer Schieberegister eingegangen, um Eigenschaften von invertierbaren rückgekoppelten Kombinationsalgorithmen zu verdeutlichen. Wenn $U(D)$ ein Impuls ist, d. h. eine "1" gefolgt von lauter Nullen, dann ist die Impulsantwort des Scramblers, d. h. des in Fig. 5 gezeigten Schieberegisters, eine Folge von Einsen und Nullen von unendlicher Länge, die als zufällige Folge erscheint. Daher wird diese Folge in der Technik auch als Pseudo-Noise-Sequenz (pn-Sequenz) bezeichnet. Der Scrambler ist ein lineares Gerät, da ja nur XORund Verzögerungsoperationen vorkommen, welche bezüglich der XOR-Arithmetik linear sind. Damit ist das Schieberegister auch invertierbar, um ein invertiertes Schieberegister erhalten zu können, das dann im Descrambler im Empfänger (Fig. 6) eingesetzt wird.

Wenn einer zu scrambelnden Folge $U_1(D)$ beispielsweise eine "1" als Präfix oder Etikett hinzugefügt wird, d. h. wenn gilt:

$$U(D) = [1\ U_1(D)]$$

wie es durch die Einrichtung 12 bzw. 12' bewerkstelligt wird, so überlagert sich die zur "1", d. h. zum Etikett, gehörige pn-Folge linear auf die zu $U_1(D)$ gehörige Ausgangsfolge $A_1(D)$, so daß gilt:

$$A(D) = [1\ (A_1(D) + pn\text{-}Folge)]$$

$A(D)$ sieht also gänzlich anders aus als $A_1(D)$, was nur durch das Etikett, das im Beispiel eine "1" war, erreicht wurde.

Wenn hingegen vor $U_1(D)$ eine "0" gesetzt wird, so gilt:

$$A(D) = [0\ A_1(D)]$$

Bei einem bevorzugten Ausführungsbeispiel wird vor die zu übertragende Folge $U_1(D)$ nicht nur ein 1 Bit langes Etikett gesetzt, sondern ein mehrere Bits langes Etikett, um nicht nur zwei verschiedene Kandidaten-Sendesequenzen (im Falle einer einzigen 0 und im Falle einer einzigen 1) sondern z. B. 16 verschiedene Kandidaten-Sendesequenzen zu erhalten. In diesem Fall wird jetzt die Ausgangsfolge $A_1(D)$ mit mehreren zeitverschobenen pn-Folgen überlagert. Die resultierende Ausgangsfolge $A(D)$ sieht somit zufällig aus und unterscheidet sich stark von den Ausgangsfolgen für andere Etiketten, so daß die Wahrscheinlichkeit größer wird, daß darunter eine Kandidaten-Sendesequenz mit einem niedrigen Spitzenwert enthalten ist.

Anschaulich ausgedrückt kann die Funktion des Etiketts auch derart dargestellt werden, daß das Etikett, das ja zuerst in das Schieberegister läuft, das Schieberegister bereits in einen bestimmten Zustand treibt, von dem ausgehend dann das in der Eingangsfolge dem Etikett folgende Informationswort gescrambelt, d. h. durch den invertierbaren rückgekoppelten Kombinationsalgorithmus verarbeitet wird.

Es sei darauf hingewiesen, daß sämtliche Verzögerungseinheiten des Rückkopplungszweigs des Schieberegisters vor einem Erzeugen einer anderen Kandidaten-Sendesequenz unter Verwendung eines anderen Etiketts auf einen definierten Zustand zurückgesetzt werden müssen, welche vorzugsweise der 0-Zustand ist, und welcher vorzugsweise auch der Zustand ist, der durch das Platzhalter-Etikett dargestellt wird.

Wie es bereits ausgeführt worden ist, ist es nicht wesentlich, daß die Einrichtung zum Hinzufügen der Etiketten oder des Platzhalter-Etiketts das Etikett unmittelbar als Präfix dem Informationswort voranstellt, sondern daß es prinzipiell genügt, daß das Etikett dem Informationswort irgendwie hinzugefügt wird, um mit dem Informationswort kombiniert werden zu können. Je weiter vorne das Etikett jedoch steht, um so unterschiedlicher sind die einzelnen Kandidaten-Sendesequenzen insgesamt, wenn kein Interleaver verwendet wird. Wird aber ein Interleaver eingesetzt, so ist der Einfluß des Orts des Etiketts im/am Informationswort auf die Unterschiedlichkeit der Kandidaten-Sendesequenzen noch reduziert. In diesem Fall muß der Empfänger jedoch ebenfalls wissen, wo das Etikett im Informationswort steht, um es zu extrahieren, damit das Informationswort ohne Etikett erhalten wird.

Im nachfolgenden wird auf Fig. 6 eingegangen, welche eine erfindungsgemäße Vorrichtung zum Ermitteln eines Informationsworts aus einer empfangenen Sendesequenz (nach einer Vorverarbeitung durch Deinterleaver und Kanal-Decodierer) zeigt, die in einem digitalen Nachrichtenempfänger enthalten sein kann. An einem Eingang 66 wird eine empfangene Sendesequenz eingespeist. Nun besteht die Aufgabe, die im Sender durchgeführte Kombinationsoperation wieder rückgängig zu machen, um das Informationswort zu erhalten. Hierzu wird die empfangene Sendesequenz unter Verwendung eines Algorithmus verarbeitet, der zum rückgekoppelten Kombinationsalgorithmus, der im Sender verwendet wurde, um die empfangene Sendesequenz zu erzeugen, invers ist. Dies geschieht durch eine Einrichtung 68, welche wieder, abgesehen von Übertragungsfehlern, das in Fig. 11 gezeigte Informationswort samt dem Etikett ausgibt. Nun muß nur noch das Etikett extrahiert werden 70, um das Informationswort an einem Ausgang 72 zu erhalten. Es sei angemerkt, daß das Etikett selbst nicht explizit benötigt wird, da es bereits dazu gedient hat, den inversen rückgekoppelten Kombinationsalgorithmus, der nun aufgrund der Inversion ein vorwärts gekoppelter Algorithmus ist, in einen Anfangszustand zu treiben, welcher auf den durch das Etikett im Sender bewirkten Anfangszustand bezogen ist. Das Etikett kann somit einfach verworfen werden, wie es in Fig. 6 bei 74 schematisch dargestellt ist.

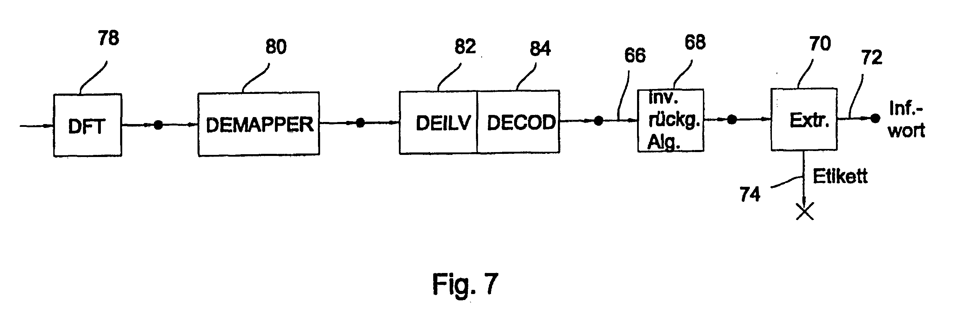

Fig. 7 zeigt eine Implementation des in Fig. 6 gezeigten erfindungsgemäßen Empfängerkonzepts am Beispiel eines OFDM-Empfängers, welcher zunächst zur Demodulation der OFDM-Unterträger eine Vorwärts-Fourier-Transformation durchführt, was in Fig. 7 durch einen Block DFT 78 veranschaulicht ist. Anschließend findet eine zur Funktion des Mappers im Sender inverse Operation in einem Demapper 80 statt, woraufhin ein optionales Interleaving rückgängig gemacht wird 82, und woraufhin auch eine Kanalcodierung wieder rückgängig gemacht wird, wozu beispielsweise ein Viterbi-Decodierer 84 verwendet werden kann.

Es sei darauf hingewiesen, daß die Einrichtung 68 zum Durchführen des inversen Algorithmus ebenso wie die Einrichtung 16 zum Durchführen des rückgekoppelten Kombinationsalgorithmus im Sender (Fig. 1 bis 4) vor jeder Decodierung eines Informationsworts in einen definierten Zustand zurückgesetzt werden muß, der vorzugsweise der 0-Zustand ist. Erst dann darf das vom Decodierer 84 ausgegebene Informationswort eingespeist werden, das unmittelbar dazu führt, daß aufgrund des Etiketts die Verzögerungseinrichtungen im Vorwärtskopplungszweig einen bestimmten zustand einnehmen, von dem ausgehend dann das kombinierte Informationswort wieder dekombiniert wird.

Es sei darauf hingewiesen, daß der Empfänger gewissermaßen als "Nebenprodukt" explizit in der Lage ist, die Kandidaten-Nummer, d. h. das Etikett zu ermitteln, daß er dies jedoch nicht explizit benötigt, um die Daten wiederzugewinnen.

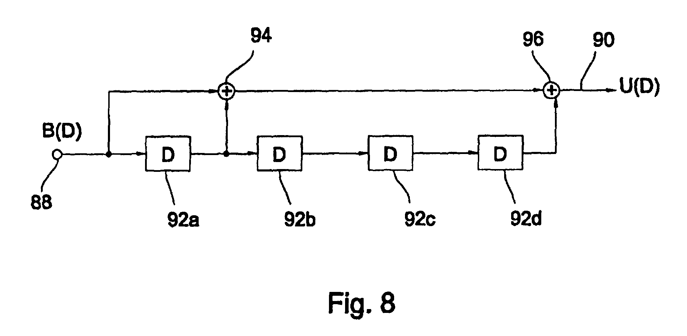

Das vorwärts gekoppelte binäre Schieberegister (Fig. 8) umfaßt wiederum einen Eingang 88 sowie einen Ausgang 90. Am Eingang liegt das mit B(D) bezeichnete kombinierte Informationswort samt kombiniertem Etikett an. Diese empfangene Sendesequenz wird nun Bit für Bit eingespeist, um nach und nach die vier Verzögerungseinheiten 92a - 92d in ihre gewünschten Zustände zu versetzen, um das am Eingang 88 nach und nach einströmende kombinierte Informationswort wieder zu dekombinieren, d. h. zu descrambeln. Entsprechend enthält das in Fig. 8 gezeigte binäre Schieberegister auch wieder zwei XOR-Verknüpfungseinrichtungen 94 und 96. Die Ausgangsfolge am Ausgang 90, die wieder mit U(D) bezeichnet ist, wird dann in die Einrichtung 70 zum Extrahieren des Etiketts (Fig. 6, Fig. 7) eingespeist, um schließlich das Informationswort zu erhalten.

Falls im Redundanz-hinzufügenden Kanalcodierer 17a (Fig. 3, Fig. 4) ein Faltungscode eingesetzt worden ist, wurde sehr wahrscheinlich hierfür ebenfalls ein jedoch vorwärts-gekoppeltes Schieberegister verwendet, um beispielsweise, wie es in Fig. 9 gezeigt ist, aus einem Eingangsbit A(D) zwei Ausgangsbits $C_1(D)$ und $C_2(D)$ zu erzeugen, wenn eine Coderate von 1/2 eingesetzt worden ist. Ein solches typisches FEC-Schieberegister umfaßt eine Anzahl von verschiedenen Verzögerungseinrichtungen 100a-100f sowie entsprechende XOR-Verknüpfungsstellen, wie es in Fig. 9 gezeigt ist. Nachdem der invertierbare rückgekoppelte Kombinationsalgorithmus ebenfalls durch ein binäres Schieberegister implementiert werden kann, können bestimmte Verzögerungselemente, wie z. B. die Verzögerungselemente 100a-100d zweifach oder gemeinsam, also von dem Kanalcodierer und von dem Scrambler, verwendet werden. Damit müssen zur Implementation des Scramblers lediglich die XOR-Verknüpfungsstellen 56 und 60e sowie die beiden Verbindungsleitungen zu den entsprechenden XOR-Verknüpfungsstellen hinzugefügt werden, derart, daß mit einer minimalen Anzahl von zusätzlichen Elementen ausgekommen werden kann.

Wie es bereits ausgeführt worden ist, ist die zusätzliche Redundanz in Form der Bits für die Etiketten gering. Es sei beispielsweise ein Fall betrachtet, bei dem 256 OFDM-Unterträger zur Mehrträgermodulation vorhanden sind. Von den 256 zur Verfügung stehenden OFDM-Unterträgern werden lediglich 219 Unterträger benutzt. Ein Informationswort wird daher eine Länge von 215 Bits haben, derart, daß sich nach Hinzufügung des Etiketts, das beim hier dargestellten Beispiel vier Bits hat, wieder 219 Bits ergeben. Es sei darauf hingewiesen, daß auf einen OFDM-Unterträger, wenn, wie im vorliegenden Falle, eine QPSK-Signalkonstellation verwendet wird, zwei Bits abgebildet werden können. Da der Kanalcodierer 17a beim vorliegenden Beispiel jedoch eine Informationsredundanz von 2 eingefügt hat, d. h. eine Coderate von 0,5 hat, entspricht genau ein Informationsbit einem Unterträger. Die inverse Fouriertransformation der 256 OFDM-Unterträger liefert dann 256 komplexe Abtastwerte oder 512 reelle Abtastwerte, von denen 256 Abtastwerte Realteile sind, und die anderen 256 Abtastwerte die den Realteilen zugeordneten Imaginärteile sind. Die zusätzliche Redundanz aufgrund des Etiketts trägt somit vier Bits bezogen auf 219 Bits, was für praktische Anwendungen nahezu unerheblich ist und praktisch zu keiner höheren Signalbandbreite oder Datenrate führt.

Im Vergleich zu einem OFDM-Verfahren ohne unterschiedliche Sendesequenzen und der Auswahl der besten Sendesequenz kann durch das erfindungsgemäße Verfahren die Außerbandstrahlung um fast 10 dB in der Nähe der Grenze des zulässigen Bandes reduziert werden. Wenn die Außerbandstrahlung unverändert gelassen wird, kann durch das erfindungsgemäße Konzept die Leistungsreserve des Sendeleistungsverstärkers in Größenordnungen von 3 dB verringert werden.

**Patentansprüche**

**Patentansprüche für folgende Vertragsstaaten : AT, BE, CH, LI, CY, DK, FI, GR, IE, LU, MC, NL, PT, SE , TR**

1. Vorrichtung zum Erzeugen einer Sendesequenz aus einem Informationswort (40), das eine Mehrzahl von Informationseinheiten (42) aufweist, mit folgenden Merkmalen:

    einer Einrichtung (10) zum Bilden einer Mehrzahl von Kandidaten-Sendesequenzen aus dem Informationswort, wobei jede Kandidaten-Sendesequenz dieselbe Information wie das Informationswort trägt; und

    einer Einrichtung (30) zum Untersuchen der Mehrzahl von Kandidaten-Sendesequenzen und zum Auswählen der Kandidaten-Sendesequenz aus der Mehrzahl von Kandidaten-Sendesequenzen als Sendesequenz, die ein vorbestimmtes Kriterium erfüllt,

    wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet,

oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder

daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat, **dadurch gekennzeichnet, daß** die Einrichtung (10) zum Bilden folgende Merkmale aufweist:

> eine Einrichtung (12) zum Hinzufügen eines Etiketts (44) zu dem Informationswort;

> eine Einrichtung (16) zum Verarbeiten des Informationsworts samt hinzugefügtem Etikett durch einen invertierbaren rückgekoppelten Kombinationsalgorithmus, wobei ein kombiniertes Informationswort erhalten wird, in dem die Informationseinheiten mit dem hinzugefügten Etikett kombiniert sind, wobei das kombinierte Informationswort durch das Etikett eindeutig identifiziert ist; und

> eine Einrichtung (18) zum Weiterverarbeiten des kombinierten Informationsworts, wobei eine zeitliche Kandidaten-Sendesequenz erhalten wird,

wobei die Einrichtung zum Bilden ferner angeordnet ist, um unter Verwendung unterschiedlicher Etiketten aus demselben Informationswort die Mehrzahl von voneinander verschiedenen Kandidaten-Sendesequenzen zu erzeugen.

2. Vorrichtung zum Erzeugen einer Sendesequenz aus einem Informationswort (40), das eine Mehrzahl von Informationseinheiten (42) aufweist, mit folgenden Merkmalen:

> einer Einrichtung (10) zum Bilden einer Mehrzahl von Kandidaten-Sendesequenzen aus dem Informationswort, wobei jede Kandidaten-Sendesequenz dieselbe Information wie das Informationswort trägt; und

> einer Einrichtung (30) zum Untersuchen der Mehrzahl von Kandidaten-Sendesequenzen und zum Auswählen der Kandidaten-Sendesequenz aus der Mehrzahl von Kandidaten-Sendesequenzen als Sendesequenz, die ein vorbestimmtes Kriterium erfüllt, wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet,

> oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder

> daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat,

**dadurch gekennzeichnet, daß** die Einrichtung zum Bilden folgende Merkmale aufweist:

> eine Einrichtung (12') zum Hinzufügen eines Platzhalter-Etiketts zu dem Informationswort;

> eine Einrichtung (16) zum Verarbeiten des Informationsworts samt hinzugefügtem Platzhalter-Etikett durch einen invertierbaren rückgekoppelten Kombinationsalgorithmus, wobei ein kombiniertes Informationswort erhalten wird, in dem die Informationseinheiten mit dem hinzugefügten Platzhalter-Etikett (13') kombiniert sind;

> eine Einrichtung (19) zum Verknüpfen des kombinierten Informationsworts oder eines von dem kombinierten Informationswort abgeleiteten Worts mit einer Verknüpfungssequenz (VS), die unter Verwendung desselben rückgekoppelten Kombinationsalgorithmus aus einem Etikett (22) bestimmt ist, wobei ein verknüpftes Informationswort erhalten wird, das durch das Etikett eindeutig identifiziert ist; und

> eine Einrichtung (18') zum Weiterverarbeiten des verknüpften Informationsworts, wobei eine zeitliche Kandidaten-Sendesequenz erhalten wird,

wobei die Einrichtung zum Bilden (10') ferner angeordnet ist, um unter Verwendung unterschiedlicher Verknüpfungssequenzen (VS), die aus verschiedenen Etiketten bestimmt sind, aus demselben Informationswort die Mehrzahl von voneinander unterschiedlichen Kandidaten-Sendesequenzen zu erzeugen.

3. Vorrichtung nach Anspruch 1 oder 2, bei der die Einrichtung (16) zum Verarbeiten durch einen invertierbaren rückgekoppelten Kombinationsalgorithmus ein Schieberegister mit folgenden Merkmalen umfaßt:

einem Eingang (50);

einem Ausgang (52);

einem Rückkopplungszweig mit einem ersten und einem zweiten Ende (54, 56), der mit seinem ersten Ende (54) mit dem Ausgang (52) verbunden ist und zumindest eine Verzögerungseinheit (60a-60d) aufweist; und

eine XOR-Verknüpfungseinrichtung (56) zum XOR-Verknüpfen einer Informationseinheit am Eingang (50) mit einem am zweiten Ende (56) des Rückkopplungszweigs anliegenden Wert, wobei die XOR-Verknüpfungseinrichtung (56) ausgangsseitig mit dem Ausgang (52) verbunden ist.

4. Vorrichtung nach einem der vorhergehenden Ansprüche, bei der die Etiketten auf unterschiedliche Zustände in einer Rückkopplung des rückgekoppelten Kombinationsalgorithmus hinweisen.

5. Vorrichtung nach Anspruch 3, bei der der Rückkopplungszweig des Schieberegisters folgende Merkmale aufweist:

eine erste Verzögerungseinrichtung (60a), die zwischen das erste Ende (54) des Rückkopplungszweigs und einen ersten Knoten geschaltet ist;

eine zweite Verzögerungseinrichtung (60b), die zwischen den ersten Knoten und einen zweiten Knoten geschaltet ist;

eine dritte Verzögerungseinrichtung (60c), die zwischen den zweiten Knoten und einen dritten Knoten geschaltet ist;

eine vierte Verzögerungseinrichtung (60d), die zwischen den dritten Knoten und einen vierten Knoten geschaltet ist; und

eine XOR-Verknüpfungseinrichtung (60e), die eingangsseitig mit dem ersten Knoten und dem vierten Knoten verbunden ist, und die ausgangsseitig das zweite Ende (56) des Rückkopplungszweigs bildet.

6. Vorrichtung nach Anspruch 1, bei der die Einrichtung (16) zum Hinzufügen eines Etiketts das Etikett dem Informationswort als Präfix voranstellt.

7. Vorrichtung nach Anspruch 1, bei der der Einrichtung (18) zum Weiterverarbeiten ein Redundanzcodierer (17a) und/oder ein Interleaver (17b) vorgeschaltet ist.

8. Vorrichtung nach Anspruch 1, bei der die Einrichtung zum Weiterverarbeiten (18) ferner folgende Merkmale aufweist:

eine Abbildungseinrichtung (18a) zum Erzeugen von Modulationswerten für eine Vielzahl von Unterträgern; und

eine Einrichtung (18b) zum Durchführen einer inversen Fourier-Transformation mit den den Unterträgern zugeordneten Modulationswerten in den Zeitbereich, wobei als zeitliche Kandidaten-Sendesequenz ein OFDM-Symbol erhalten wird.

9. Vorrichtung nach Anspruch 1, bei der die Einrichtung zum Bilden (10) angeordnet ist, um die Mehrzahl von Kandidaten-Sendesequenzen zeitlich nacheinander zu erzeugen, und die ferner folgende Merkmale aufweist:

einen ersten Schalter (24) zum seriellen Liefern der einzelnen Etiketten (24) zur Einrichtung (12) zum Hinzufügen der Etiketten;

einen zweiten Schalter (26) zum seriellen Liefern der zeitlichen Kandidaten-Sendesequenzen zu der Einrichtung (30) zum Untersuchen und Auswählen; und

eine Steuereinrichtung zum synchronen Steuern des ersten und zweiten Schalters (24, 26), derart, daß die Schalter um eine Position weitergeschaltet werden, wenn eine zeitliche Kandidaten-Sendesequenz erzeugt und zur Einrichtung (30) zum Auswählen geliefert ist.

10. Vorrichtung nach Anspruch 1, bei der die Einrichtung zum Verarbeiten durch den rückgekoppelten Kombinationsalgorithmus durch ein rückgekoppeltes Schieberegister mit zumindest einer Verzögerungseinrichtung im Rückkopplungszweig implementiert ist, und bei der die Einrichtung zum Weiterverarbeiten (18) einen Redundanz-Codierer aufweist, der als ein vorwärts gekoppeltes Schieberegister mit zumindest einer Verzögerungseinrichtung ausgeführt ist, wobei beide Schieberegister gekoppelt sind, um die zumindest eine Verzögerungseinrichtung (100a-100d) gemeinsam zu verwenden.

11. Vorrichtung nach Anspruch 2, bei der die Einrichtung (12') zum Hinzufügen des Platzhalter-Etiketts (13') das Platzhalter-Etikett dem Informationswort als Präfix voranstellt.

12. Vorrichtung nach Anspruch 2, bei der die Einrichtung zum Bilden (10) einer Mehrzahl von Kandidaten-Sendesequenzen folgende Merkmale aufweist:

> eine Einrichtung (17a) zum Redundanz-Codieren des kombinierten Informationsworts und/oder eine Einrichtung (17b) zum Verschachteln des Redundanz-codierten Informationsworts oder des kombinierten Informationsworts, wobei das von dem kombinierten Informationswort abgeleitete Wort erhalten wird.

13. Vorrichtung nach Anspruch 2, bei der die Einrichtung (19) zum Verknüpfen folgendes Merkmal aufweist:

> eine Speichereinrichtung zum Speichern der verschiedenen Verknüpfungssequenzen, die aus den verschiedenen Etiketten bestimmt sind.

14. Vorrichtung nach Anspruch 2, bei der die Einrichtung zum Verarbeiten durch den rückgekoppelten Kombinationsalgorithmus durch ein rückgekoppeltes Schieberegister mit zumindest einer Verzögerungseinrichtung im Rückkopplungszweig implementiert ist, und bei der die Einrichtung zum Weiterverarbeiten (18) einen Redundanz-Codierer aufweist, der als ein vorwärts gekoppeltes Schieberegister mit zumindest einer Verzögerungseinrichtung ausgeführt ist, wobei beide Schieberegister gekoppelt sind, um die zumindest eine Verzögerungseinrichtung (100a-100d) gemeinsam zu verwenden.

15. Vorrichtung nach Anspruch 2, bei der die Einrichtung (18') zum Weiterverarbeiten des verknüpften Informationsworts folgende Merkmale aufweist:

> eine Abbildungseinrichtung zum Erzeugen von Modulationswerten für eine Vielzahl von Unterträgern; und
> eine Einrichtung zum Durchführen einer inversen Fourier-Transformation mit den den Unterträgern zugeordneten Modulationswerten in den Zeitbereich, wobei als zeitliche Kandidaten-Sendesequenz ein OFDM-Symbol erhalten wird.

16. Vorrichtung nach einem der vorhergehenden Ansprüche, bei der die Einrichtung (30) zum Untersuchen angeordnet ist, um als vorbestimmtes Kriterium entweder den kleinsten Spitzenwert oder die kleinste Außerbandstrahlung oder die niedrigste Durchschnittsleistung der Kandidaten-Sendesequenzen oder eine gewichtete Kombination der vorstehenden Kriterien zu verwenden.

17. Vorrichtung zum Ermitteln eines Informationsworts aus einer empfangenen Sendesequenz, die durch eine Vorrichtung nach Anspruch 1 oder 2 erzeugt worden ist, die eine Einrichtung zum Verarbeiten des Informationsworts und eines Etiketts durch einen invertierbaren rückgekoppelten Kombinationsalgorithmus aufweist, mit folgenden Merkmalen:

> einer Einrichtung (68) zum Verarbeiten der empfangenen Sendesequenz durch einen zum invertierbaren rückgekoppelten Kombinationsalgorithmus inversen Algorithmus, wobei eine Sequenz erhalten wird, die das Informationswort und das Etikett enthält; und

> einer Einrichtung (70) zum Extrahieren des Etiketts aus der Sequenz, wobei das Informationswort erhalten wird.

18. Vorrichtung nach Anspruch 17, bei der die Einrichtung zum Verarbeiten (68) ein vorwärts gekoppeltes Schieberegister mit Verzögerungseinheiten (60a - 60d) und eine XOR-Verknüpfungen (56, 60e) aufweist, das zu einem beim Erzeugen verwendeten rückgekoppelten Schieberegister, das Verzögerungseinheiten (92a - 92d) und XOR-Verknüpfungen (94, 96) aufweist, genau invers ist.

19. Vorrichtung nach Anspruch 17 oder Anspruch 18, bei der beim Erzeugen der empfangenen Sendesequenz dem Informationswort ein Etikett mit einer bestimmten Länge vorangestellt wurde, wobei die Einrichtung (70) zum Extrahieren angeordnet ist, um den Abschnitt der Sequenz, dessen Länge gleich der Länge des Etiketts ist, ausgehend vom Beginn der Sequenz abzuschneiden und zu verwerfen (74), damit das Informationswort zurückbleibt.

20. Vorrichtung nach einem der Ansprüche 17 bis 19, bei der die empfangene Sendesequenz einer Modulation, einer Verschachtelung und/oder einer Redundanz-Codierung in einem Sender unterzogen worden ist, die ferner folgende Merkmale aufweist:

> eine Einrichtung (78, 80) zum Demodulieren;

> eine Einrichtung (82) zum Rückgängigmachen der Verschachtelung; und/oder

> eine Einrichtung (84) zum Kanal-Decodieren.

21. Verfahren zum Erzeugen einer Sendesequenz aus einem Informationswort (40), das eine Mehrzahl von Informationseinheiten (42) aufweist, mit folgenden Schritten:

> Bilden (10) einer Mehrzahl von Kandidaten-Sendesequenzen aus dem Informationswort, wobei jede Kandidaten-Sendesequenz dieselbe Information wie das Informationswort trägt; und

Untersuchen (30) der Mehrzahl von Kandidaten-Sendesequenzen und Auswählen der Kandidaten-Sendesequenz aus der Mehrzahl von Kandidaten-Sendesequenzen als Sendesequenz, die ein vorbestimmtes Kriterium erfüllt, wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet,

oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat, **dadurch gekennzeichnet, daß** der Schritt des Bildens (10) folgende Teilschritte aufweist:

Hinzufügen (12) eines Etiketts (44) zu dem Informationswort;

Verarbeiten (16) des Informationsworts samt hinzugefügtem Etikett durch einen invertierbaren rückgekoppelten Kombinationsalgorithmus, wobei ein kombiniertes Informationswort erhalten wird, in dem die Informationseinheiten mit dem hinzugefügten Etikett kombiniert sind, wobei das kombinierte Informationswort durch das Etikett eindeutig identifiziert ist;

Weiterverarbeiten (18) des kombinierten Informationsworts, wobei eine zeitliche Kandidaten-Sendesequenz erhalten wird, und

wobei der Schritt des Bildens ferner ausgeführt wird, um unter Verwendung unterschiedlicher Etiketten aus demselben Informationswort die Mehrzahl von voneinander verschiedenen Kandidaten-Sendesequenzen zu erzeugen.

22. Verfahren zum Erzeugen einer Sendesequenz aus einem Informationswort (40), das eine Mehrzahl von Informationseinheiten (42) aufweist, mit folgenden Schritten:

Bilden (10) einer Mehrzahl von Kandidaten-Sendesequenzen aus dem Informationswort, wobei jede Kandidaten-Sendesequenz dieselbe Information wie das Informationswort trägt; und

Untersuchen (30) der Mehrzahl von Kandidaten-Sendesequenzen und Auswählen der Kandidaten-Sendesequenz aus der Mehrzahl von Kandidaten-Sendesequenzen als Sendesequenz, die ein vorbestimmtes Kriterium erfüllt,

wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet, oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat, **dadurch gekennzeichnet, daß** der Schritt des Bildens (10) folgende Teilschritte aufweist:

Hinzufügen (12') eines Platzhalter-Etiketts zu dem Informationswort;

Verarbeiten (16) des Informationsworts samt hinzugefügtem Platzhalter-Etikett durch einen invertierbaren rückgekoppelten Kombinationsalgorithmus, wobei ein kombiniertes Informationswort erhalten wird, in dem die Informationseinheiten mit dem hinzugefügten Platzhalter-Etikett (13') kombiniert sind;

Verknüpfen (19) des kombinierten Informationsworts oder eines von dem kombinierten Informationswort abgeleiteten Worts mit einer Verknüpfungssequenz (VS), die unter Verwendung desselben rückgekoppelten Kombinationsalgorithmus aus einem Etikett (22) bestimmt ist, wobei ein verknüpftes Informationswort erhalten wird, das durch das Etikett eindeutig identifiziert ist; und

Weiterverarbeiten (18') des verknüpften Informationsworts, wobei eine zeitliche Kandidaten-Sendesequenz erhalten wird,

wobei der Schritt des Bildens (10') ferner ausgeführt wird, um unter Verwendung unterschiedlicher Verknüpfungssequenzen (VS), die aus verschiedenen Etiketten bestimmt sind, aus demselben Informationswort die Mehrzahl von voneinander unterschiedlichen Kandidaten-Sendesequenzen zu erzeugen.

23. Verfahren zum Ermitteln eines Informationsworts aus einer empfangenen Sendesequenz, die durch ein Verfahren nach Anspruch 21 oder 22 erzeugt worden ist, wobei das Verfahren einen Schritt des Verarbeitens des Informationsworts und eines Etiketts durch einen invertierbaren rückgekoppelten Kombinationsalgorithmus aufweist, mit folgenden Schritten:

Verarbeiten (68) der empfangenen Sendesequenz durch einen zum invertierbaren rückgekoppelten Kombinationsalgorithmus inversen Algorithmus, wobei eine Sequenz erhalten wird, die das Informationswort und das Etikett enthält; und

Extrahieren (70) des Etiketts aus der Sequenz, wobei das Informationswort erhalten wird.

**Patentansprüche für folgende Vertragsstaaten : DE, ES, FR, GB, IT**

1. Vorrichtung zum Erzeugen einer Sendesequenz aus einem Informationswort (40), das eine Mehrzahl von Informationseinheiten (42) aufweist, mit folgenden Merkmalen:

einer Einrichtung (10) zum Bilden einer Mehrzahl von Kandidaten-Sendesequenzen aus dem Informationswort, wobei jede Kandidaten-Sendesequenz dieselbe Information wie das Informationswort trägt; und

einer Einrichtung (30) zum Untersuchen der Mehrzahl von Kandidaten-Sendesequenzen und zum Auswählen der Kandidaten-Sendesequenz aus der Mehrzahl von Kandidaten-Sendesequenzen als Sendesequenz, die ein vorbestimmtes Kriterium erfüllt,

wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet,
oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder
daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat,
**dadurch gekennzeichnet, daß** die Einrichtung (10) zum Bilden folgende Merkmale aufweist:

eine Einrichtung (12) zum Hinzufügen eines Etiketts (44) zu dem Informationswort;

eine Einrichtung (16) zum Verarbeiten des Informationsworts samt hinzugefügtem Etikett durch einen invertierbaren rückgekoppelten Kombinationsalgorithmus, wobei ein kombiniertes Informationswort erhalten wird, in dem die Informationseinheiten mit dem hinzugefügten Etikett kombiniert sind, wobei das kombinierte Informationswort durch das Etikett eindeutig identifiziert ist; und

eine Einrichtung (18) zum Weiterverarbeiten des kombinierten Informationsworts, wobei eine zeitliche Kandidaten-Sendesequenz erhalten wird, wobei der Einrichtung (18) zum Weiterverarbeiten ein Redundanzcodierer (17a) vorgeschaltet ist,

wobei die Einrichtung zum Bilden ferner angeordnet ist, um unter Verwendung unterschiedlicher Etiketten aus demselben Informationswort die Mehrzahl von voneinander verschiedenen Kandidaten-Sendesequenzen zu erzeugen.

2. Vorrichtung zum Erzeugen einer Sendesequenz aus einem Informationswort (40), das eine Mehrzahl von Informationseinheiten (42) aufweist, mit folgenden Merkmalen:

einer Einrichtung (10) zum Bilden einer Mehrzahl von Kandidaten-Sendesequenzen aus dem Informationswort, wobei jede Kandidaten-Sendesequenz dieselbe Information wie das Informationswort trägt; und

einer Einrichtung (30) zum Untersuchen der Mehrzahl von Kandidaten-Sendesequenzen und zum Auswählen der Kandidaten-Sendesequenz aus der Mehrzahl von Kandidaten-Sendesequenzen als Sendesequenz, die ein vorbestimmtes Kriterium erfüllt, wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet,

oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder

daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat,

**dadurch gekennzeichnet, daß** die Einrichtung zum Bilden folgende Merkmale aufweist:

> eine Einrichtung (12') zum Hinzufügen eines Platzhalter-Etiketts zu dem Informationswort;

> eine Einrichtung (16) zum Verarbeiten des Informationsworts samt hinzugefügtem Platzhalter-Etikett durch einen invertierbaren rückgekoppelten Kombinationsalgorithmus, wobei ein kombiniertes Informationswort erhalten wird, in dem die Informationseinheiten mit dem hinzugefügten Platzhalter-Etikett (13') kombiniert sind;

> eine Einrichtung (19) zum Verknüpfen des kombinierten Informationsworts oder eines von dem kombinierten Informationswort abgeleiteten Worts mit einer Verknüpfungssequenz (VS), die unter Verwendung desselben rückgekoppelten Kombinationsalgorithmus aus einem Etikett (22) bestimmt ist, wobei ein verknüpftes Informationswort erhalten wird, das durch das Etikett eindeutig identifiziert ist; und

> eine Einrichtung (18') zum Weiterverarbeiten des verknüpften Informationsworts, wobei eine zeitliche Kandidaten-Sendesequenz erhalten wird,

> wobei die Einrichtung zum Bilden (10') ferner angeordnet ist, um unter Verwendung unterschiedlicher Verknüpfungssequenzen (VS), die aus verschiedenen Etiketten bestimmt sind, aus demselben Informationswort die Mehrzahl von voneinander unterschiedlichen Kandidaten-Sendesequenzen zu erzeugen.

3. Vorrichtung nach Anspruch 1 oder 2, bei der die Einrichtung (16) zum Verarbeiten durch einen invertierbaren rückgekoppelten Kombinationsalgorithmus ein Schieberegister mit folgenden Merkmalen umfaßt:

> einem Eingang (50);

> einem Ausgang (52);

> einem Rückkopplungszweig mit einem ersten und einem zweiten Ende (54, 56), der mit seinem ersten Ende (54) mit dem Ausgang (52) verbunden ist und zumindest eine Verzögerungseinheit (60a-60d) aufweist; und

> eine XOR-Verknüpfungseinrichtung (56) zum XOR-Verknüpfen einer Informationseinheit am Eingang (50) mit einem am zweiten Ende (56) des Rückkopplungszweigs anliegenden Wert, wobei die XOR-Verknüpfungseinrichtung (56) ausgangsseitig mit dem Ausgang (52) verbunden ist.

4. Vorrichtung nach einem der vorhergehenden Ansprüche, bei der die Etiketten auf unterschiedliche Zustände in einer Rückkopplung des rückgekoppelten Kombinationsalgorithmus hinweisen.

5. Vorrichtung nach Anspruch 3, bei der der Rückkopplungszweig des Schieberegisters folgende Merkmale aufweist:

> eine erste Verzögerungseinrichtung (60a), die zwischen das erste Ende (54) des Rückkopplungszweigs und einen ersten Knoten geschaltet ist;

> eine zweite Verzögerungseinrichtung (60b), die zwischen den ersten Knoten und einen zweiten Knoten geschaltet ist;

> eine dritte Verzögerungseinrichtung (60c), die zwischen den zweiten Knoten und einen dritten Knoten geschaltet ist;

> eine vierte Verzögerungseinrichtung (60d), die zwischen den dritten Knoten und einen vierten Knoten geschaltet ist; und

> eine XOR-Verknüpfungseinrichtung (60e), die eingangsseitig mit dem ersten Knoten und dem vierten Knoten verbunden ist, und die ausgangsseitig das zweite Ende (56) des Rückkopplungszweigs bildet.

6. Vorrichtung nach Anspruch 1, bei der die Einrichtung (16) zum Hinzufügen eines Etiketts das Etikett dem Informationswort als Präfix voranstellt.

7. Vorrichtung nach Anspruch 1, bei der der Einrichtung (18) zum Weiterverarbeiten ferner ein Interleaver (17b) vorgeschaltet ist.

8. Vorrichtung nach Anspruch 1, bei der die Einrichtung zum Weiterverarbeiten (18) ferner folgende Merkmale aufweist:

> eine Abbildungseinrichtung (18a) zum Erzeugen von Modulationswerten für eine Vielzahl von Unterträgern; und

> eine Einrichtung (18b) zum Durchführen einer inversen Fourier-Transformation mit den den Unterträgern zugeordneten Modulationswerten in den Zeitbereich, wobei als zeitliche Kandidaten-Sendesequenz ein OFDM-Symbol erhalten wird.

9. Vorrichtung nach Anspruch 1, bei der die Einrichtung zum Bilden (10) angeordnet ist, um die Mehrzahl von Kandidaten-Sendesequenzen zeitlich nacheinander zu erzeugen, und die ferner folgende Merkmale aufweist:

einen ersten Schalter (24) zum seriellen Liefern der einzelnen Etiketten (24) zur Einrichtung (12) zum Hinzufügen der Etiketten;

einen zweiten Schalter (26) zum seriellen Liefern der zeitlichen Kandidaten-Sendesequenzen zu der Einrichtung (30) zum Untersuchen und Auswählen; und

eine Steuereinrichtung zum synchronen Steuern des ersten und zweiten Schalters (24, 26), derart, daß die Schalter um eine Position weitergeschaltet werden, wenn eine zeitliche Kandidaten-Sendesequenz erzeugt und zur Einrichtung (30) zum Auswählen geliefert ist.

10. Vorrichtung nach Anspruch 1, bei der die Einrichtung zum Verarbeiten durch den rückgekoppelten Kombinationsalgorithmus durch ein rückgekoppeltes Schieberegister mit zumindest einer Verzögerungseinrichtung im Rückkopplungszweig implementiert ist, und bei der die Einrichtung zum Weiterverarbeiten (18) einen Redundanz-Codierer aufweist, der als ein vorwärts gekoppeltes Schieberegister mit zumindest einer Verzögerungseinrichtung ausgeführt ist, wobei beide Schieberegister gekoppelt sind, um die zumindest eine Verzögerungseinrichtung (100a-100d) gemeinsam zu verwenden.

11. Vorrichtung nach Anspruch 2, bei der die Einrichtung (12') zum Hinzufügen des Platzhalter-Etiketts (13') das Platzhalter-Etikett dem Informationswort als Präfix voranstellt.

12. Vorrichtung nach Anspruch 2, bei der die Einrichtung zum Bilden (10) einer Mehrzahl von Kandidaten-Sendesequenzen folgende Merkmale aufweist:

eine Einrichtung (17a) zum Redundanz-Codieren des kombinierten Informationsworts und/oder eine Einrichtung (17b) zum Verschachteln des Redundanz-codierten Informationsworts oder des kombinierten Informationsworts, wobei das von dem kombinierten Informationswort abgeleitete Wort erhalten wird.

13. Vorrichtung nach Anspruch 2, bei der die Einrichtung (19) zum Verknüpfen folgendes Merkmal aufweist:

eine Speichereinrichtung zum Speichern der verschiedenen Verknüpfungssequenzen, die aus den verschiedenen Etiketten bestimmt sind.

14. Vorrichtung nach Anspruch 2, bei der die Einrichtung zum Verarbeiten durch den rückgekoppelten Kombinationsalgorithmus durch ein rückgekoppeltes Schieberegister mit zumindest einer Verzögerungseinrichtung im Rückkopplungszweig implementiert ist, und bei der die Einrichtung zum Weiterverarbeiten (18) einen Redundanz-Codierer aufweist, der als ein vorwärts gekoppeltes Schieberegister mit zumindest einer Verzögerungseinrichtung ausgeführt ist, wobei beide Schieberegister gekoppelt sind, um die zumindest eine Verzögerungseinrichtung (100a-100d) gemeinsam zu verwenden.

15. Vorrichtung nach Anspruch 2, bei der die Einrichtung (18') zum Weiterverarbeiten des verknüpften Informationsworts folgende Merkmale aufweist:

eine Abbildungseinrichtung zum Erzeugen von Modulationswerten für eine Vielzahl von Unterträgern; und

eine Einrichtung zum Durchführen einer inversen Fourier-Transformation mit den den Unterträgern zugeordneten Modulationswerten in den Zeitbereich, wobei als zeitliche Kandidaten-Sendesequenz ein OFDM-Symbol erhalten wird.

16. Vorrichtung nach einem der vorhergehenden Ansprüche, bei der die Einrichtung (30) zum Untersuchen angeordnet ist, um als vorbestimmtes Kriterium entweder den kleinsten Spitzenwert oder die kleinste Außerbandstrahlung oder die niedrigste Durchschnittsleistung der Kandidaten-Sendesequenzen oder eine gewichtete Kombination der vorstehenden Kriterien zu verwenden.

17. Vorrichtung zum Ermitteln eines Informationsworts aus einer empfangenen Sendesequenz, die durch eine Vorrichtung nach Anspruch 1 oder 2 erzeugt worden ist, die eine Einrichtung zum Verarbeiten des Informationsworts und eines Etiketts durch einen invertierbaren rückgekoppelten Kombinationsalgorithmus aufweist, mit folgenden Merkmalen:

einer Einrichtung (68) zum Verarbeiten der empfangenen Sendesequenz durch einen zum invertierbaren rückgekoppelten Kombinationsalgorithmus inversen Algorithmus, wobei eine Sequenz erhalten wird, die das Informationswort und das Etikett enthält; und

einer Einrichtung (70) zum Extrahieren des Etiketts aus der Sequenz, wobei das Informationswort erhalten wird,

wobei die Einrichtung zum Verarbeiten (68) ein vorwärts gekoppeltes Schieberegister mit Verzögerungseinheiten (60a - 60d) und XOR-Verknüpfungen (56, 60e) aufweist, das zu einem beim Erzeugen verwendeten rückgekoppelten Schieberegister, das Verzögerungseinheiten (92a - 92d) und XOR-Verknüpfungen (94, 96) aufweist, genau invers ist.

18. Vorrichtung nach Anspruch 17, bei der beim Erzeugen der empfangenen Sendesequenz dem Informationswort ein Etikett mit einer bestimmten Länge vorangestellt wurde, wobei die Einrichtung (70) zum Extrahieren angeordnet ist, um den Abschnitt der Sequenz, dessen Länge gleich der Länge des Etiketts ist, ausgehend vom Beginn der Sequenz abzuschneiden und zu verwerfen (74), damit das Informationswort zurückbleibt.

19. Vorrichtung nach Anspruch 17 oder 18, bei der die empfangene Sendesequenz einer Modulation, einer Verschachtelung und/oder einer Redundanz-Codierung in einem Sender unterzogen worden ist, die ferner folgende Merkmale aufweist:

eine Einrichtung (78, 80) zum Demodulieren;

eine Einrichtung (82) zum Rückgängigmachen der Verschachtelung; und/oder

eine Einrichtung (84) zum Kanal-Decodieren.

20. Verfahren zum Erzeugen einer Sendesequenz aus einem Informationswort (40), das eine Mehrzahl von Informationseinheiten (42) aufweist, mit folgenden Schritten:

Bilden (10) einer Mehrzahl von Kandidaten-Sendesequenzen aus dem Informationswort, wobei jede Kandidaten-Sendesequenz dieselbe Information wie das Informationswort trägt; und

Untersuchen (30) der Mehrzahl von Kandidaten-Sendesequenzen und Auswählen der Kandidaten-Sendesequenz aus der Mehrzahl von Kandidaten-Sendesequenzen als Sendesequenz, die ein vorbestimmtes Kriterium erfüllt, wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet,

oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder

daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat,

**dadurch gekennzeichnet, daß** der Schritt des Bildens (10) folgende Teilschritte aufweist:

Hinzufügen (12) eines Etiketts (44) zu dem Informationswort;

Verarbeiten (16) des Informationsworts samt hinzugefügtem Etikett durch einen invertierbaren rückgekoppelten Kombinationsalgorithmus, wobei ein kombiniertes Informationswort erhalten wird, in dem die Informationseinheiten mit dem hinzugefügten Etikett kombiniert sind, wobei das kombinierte Informationswort durch das Etikett eindeutig identifiziert ist;

Weiterverarbeiten (18) des kombinierten Informationsworts, wobei eine zeitliche Kandidaten-Sendesequenz erhalten wird, wobei vor dem Teilschritt des Weiterverarbeitens (18) ein Teilschritt des Redundanzcodierens (17a) ausgeführt wird, und

wobei der Schritt des Bildens ferner ausgeführt wird, um unter Verwendung unterschiedlicher Etiketten aus demselben Informationswort die Mehrzahl von voneinander verschiedenen Kandidaten-Sendesequenzen zu erzeugen.

21. Verfahren zum Erzeugen einer Sendesequenz aus einem Informationswort (40), das eine Mehrzahl von Informationseinheiten (42) aufweist, mit folgenden Schritten:

Bilden (10) einer Mehrzahl von Kandidaten-Sendesequenzen aus dem Informationswort, wobei jede Kandidaten-Sendesequenz dieselbe Information wie das Informationswort trägt; und

Untersuchen (30) der Mehrzahl von Kandidaten-Sendesequenzen und Auswählen der Kandidaten-Sendesequenz aus der Mehrzahl von Kandidaten-Sendesequenzen als Sendesequenz, die ein vorbestimmtes Kriterium erfüllt,

wobei das vorbestimmte Kriterium so gewählt ist, daß eine Außerbandstrahlung einer Sendevorrichtung beim Senden der ausgewählten Kandidaten-Sendesequenz eine Toleranzgrenze nicht überschreitet,

oder daß als vorbestimmtes Kriterium der kleinste Spitzenwert verwendet wird, so daß die Kandidaten-Sendesequenz das vorbestimmte Kriterium erfüllt, die den kleinsten Spitzenwert hat, oder daß als vorbestimmtes Kriterium die kleinste Durchschnittsleistung verwendet wird, so daß die Kandidaten-Sendesequenz das vorbestimmte Kriterium erfüllt, die die kleinste Durchschnittsleistung hat, **dadurch gekennzeichnet, daß** der Schritt des Bildens (10) folgende Teilschritte aufweist:

Hinzufügen (12') eines Platzhalter-Etiketts zu dem Informationswort;

Verarbeiten (16) des Informationsworts samt hinzugefügtem Platzhalter-Etikett durch einen invertierbaren rückgekoppelten Kombinationsalgorithmus, wobei ein kombiniertes Informationswort erhalten wird, in dem die Informationseinheiten mit dem hinzugefügten Platzhalter-Etikett (13') kombiniert sind;

Verknüpfen (19) des kombinierten Informationsworts oder eines von dem kombinierten Informationswort abgeleiteten Worts mit einer Verknüpfungssequenz (VS), die unter Verwendung desselben rückgekoppelten Kombinationsalgorithmus aus einem Etikett (22) bestimmt ist, wobei ein verknüpftes Informationswort erhalten wird, das durch das Etikett eindeutig identifiziert ist; und

Weiterverarbeiten (18') des verknüpften Informationsworts, wobei eine zeitliche Kandidaten-Sendesequenz erhalten wird,

wobei der Schritt des Bildens (10') ferner ausgeführt wird, um unter Verwendung unterschiedlicher Verknüpfungssequenzen (VS), die aus verschiedenen Etiketten bestimmt sind, aus demselben Informationswort die Mehrzahl von voneinander unterschiedlichen Kandidaten-Sendesequenzen zu erzeugen.

22. Verfahren zum Ermitteln eines Informationsworts aus einer empfangenen Sendesequenz, die durch ein Verfahren nach Anspruch 20 oder 21 erzeugt worden ist, wobei das Verfahren einen Schritt des Verarbeitens des Informationsworts und eines Etiketts durch einen invertierbaren rückgekoppelten Kombinationsalgorithmus aufweist, mit folgenden Schritten:

Verarbeiten (68) der empfangenen Sendesequenz durch einen zum invertierbaren rückgekoppelten Kombinationsalgorithmus inversen Algorithmus, wobei eine Sequenz erhalten wird, die das Informationswort und das Etikett enthält; und

Extrahieren (70) des Etiketts aus der Sequenz, wobei das Informationswort erhalten wird,

wobei der Schritt des Verarbeitens einen Schritt der bitweisen Verzögerung der empfangenen Sendesequenz sowie einen Schritt des vorwärts gekoppelten XOR-Verknüpfens der bitweise verzögerten Sendesequenz aufweist, wobei die bitweise Verzögerung und vorwärts gekoppelte XOR-Verknüpfung zu einer beim Erzeugen verwendeten bitweisen Verzögerung und rückgekoppelten XOR-Verknüpfung genau invers ist.

## Claims

**Claims for the following Contracting States : AT, BE, CH, LI, CY, DK, FI, GR, IE, LU, MC, NL, PT, SE, TR**

1. A device for generating a transmit sequence from an information word (40) which comprises a plurality of information units (42), comprising:

means (10) for forming a plurality of candidate transmit sequences from the information word, with each candidate transmit sequence carrying the same information as the information word; and

means (30) for examining the plurality of candidate transmit sequences and for selecting the candidate transmit sequence from the plurality of candidate transmit sequences as a transmit sequence, which fulfils a predetermined criterion,

wherein the predetermined criterion is selected, so that an out-of-band radiation of a transmitter does not exceed a tolerance limit when transmitting the selected candidate transmit sequence, or that, as a predetermined criterion, the smallest peak value is used, so that the candidate transmit sequence having the smallest peak value fulfils the predetermined criterion, or that, as a predetermined criterion, the lowest average power is used, so that the candidate transmit sequence having the lowest average power fulfils the predetermined criterion, **characterised in that** the forming means (10) comprises:

means (12) for adding a tag (44) to the information word;

means (16) for processing the information word and the added tag by an invertible feed-back combination algorithm, wherein a combined information word is obtained, in which the information units are combined with the added tag, with the combined information word being uniquely identified by the tag; and

means (18) for further processing the combined information word wherein a time candidate transmit sequence is obtained,

wherein the forming means is further arranged to generate the plurality of candidate transmit sequences differing from each other by using different tags from the same information word.

2. A device for generating a transmit sequence from an information word (40), which comprises a plurality of information units (42), comprising:

means (10) for forming a plurality of candidate transmit sequences from the information word with each candidate transmit sequence carrying the same information as the information word; and

means (30) for examining the plurality of candidate transmit sequences and for selecting the candidate transmit sequence from the plurality of candidate transmit sequences as a transmit sequence which fulfils a predetermined criterion, wherein the predetermined criterion is selected, so that an out-of-band radiation of a transmitter does not exceed a tolerance limit when transmitting the selected candidate transmit sequence,

or that, as a predetermined criterion, the smallest peak value is used, so that the candidate transmit sequence having the smallest peak value fulfils the predetermined criterion, or

that, as a predetermined criterion, the lowest average power is used, so that the candidate transmit sequence having the lowest average power fulfils the predetermined criterion,

**characterised in that** the forming means comprises:

means (12') for adding a place holder tag to the information word;

means (16) for processing the information word and the added place holder tag by an invertible feed-back combination algorithm to obtain a combined information word, in which the information units are combined with each other and / or with the added place holder tag (13');

means (19) for linking the combined information word or a word derived from the combined information word with a linking sequence (VS) which is determined from a tag (22) by using the same feed-back combination algorithm to obtain a linked information word which is uniquely identified by the tag; and

means (18') for further processing the linked information word to obtain a time candidate transmit sequence;

wherein the forming means (10') is further arranged to generate from the same information word the plurality of differing candidate transmit sequences by using different linking sequences (VS) which are determined from various tags.

3. A device according to claim 1 or 2, wherein the means (16) for processing by an invertible feed-back combination algorithm includes a shift register comprising:

an input (50);

an output (52);

a feed-back path having first and second ends (54, 56) which is connected to the output (52) with its first end (54) and which comprises at least one delay unit (60a-60d); and

XORing means (56) for XORing an information unit at the output (50) with a value applied at the second end (56) of the feed-back path with the XORing means (56) being connected to the output (52) at the output side.

4. A device according to one of the preceding claims, wherein the tags indicate different states in a feed-back of the feed-back combination algorithm.

5. A device according to claim 3, wherein the feed-back path of the shift register comprises:

first delay means (60a) connected between the first end (54) of the feed-back path and a first node;

second delay means (60b) connected between the first node and a second node;

third delay means (60c) connected between the second node and a third node;

fourth delay means (60d) connected between the third node and a fourth node; and

XORing means (60e) which, on the input side, is connected to the first node and the fourth node and which, on the output side, forms the second end (56) of the feed-back path.

6. A device according to claim 1, wherein the means (16) for adding a tag places the tag as a prefix in front of the information word.

7. A device according to claim 1, wherein the further processing means (18) follows a redundancy encoder (17a) and/or an interleaver (17b).

8. A device according to claim 1, wherein the further-processing means (18) comprises:

   mapping means (18a) for generating modulation values for a multiplicity of sub-carriers; and

   means (18b) for performing an inverse Fourier transform with the modulation values assigned to the sub-carriers into the time domain to obtain an OFDM symbol as a time candidate transmit sequence.

9. A device according to claim 1, wherein the forming means (10) is arranged to generate the plurality of candidate transmit sequences in a successive time order, and comprising:

   first switch (24) for serially providing the individual tags (24) to the tag adding means (12);

   second switch (26) for serially providing the time candidate transmit sequences to the examining and selecting means (30); and

   control means for synchronously controlling the first and second switch (24, 26) such that the switches are advanced by one position, when a time candidate transmit sequence is generated and provided to the selecting means (30).

10. A device according to claim 1, wherein the means for processing by the feed-back combination algorithm is implemented by a feed-back shift register with at least one delay means in the feed-back path, and wherein the further processing means (18) comprises a redundancy encoder, which is implemented as a feed-forward shift register with at least one delay means, wherein both shift registers are coupled to share the at least one delay means (100a-100d).

11. A device according to claim 2, wherein the means (12') for adding the place holder tag (13') places the place holder tag as a prefix in front of the information word.

12. A device according to claim 2, wherein the means for forming (10) a plurality of candidate transmit sequences, comprises:

   means (17a) for redundancy-encoding of the information word and/or a means (17b) for nesting the redundancy-encoded information word or the combined information word to obtain the word derived by the combined information word.

13. A device according to claim 2, wherein the linking means (19) comprises:

   storage means for storing the various linking sequences determined from the various tags.

14. A device according to claim 2, wherein the means for processing by the feed-back combination algorithm is implemented by a feed-back shift register with at least one delay means in the feed-back path, and wherein the means for further processing (18) comprises a redundancy encoder which is implemented as a feed-forward shift register with at least one delay means, wherein both shift registers are coupled to share the at least one delay means (100a-100d).

15. A device according to claim 2, wherein the means (18') for further processing the linked information word comprises:

   mapping means for generating modulation values for a multiplicity of sub-carriers; and

   means for performing an inverse Fourier transform with the modulation values assigned to the sub-carriers into the time domain to obtain an OFDM symbol as a time candidate transmit sequence.

16. A device according to one of the preceding claims, wherein the examining means (30) is arranged to use, as a predetermined criterion, either the smallest peak value or the smallest out-of-band radiation or the lowest average power of the candidate transmit sequences or a weighted combination of the above criteria.

17. A device for retrieving an information word from a received transmit sequence, which has been generated by a device according to claim 1 or 2 comprising a means for processing the information word and a tag by an invertible feed-back combination algorithm, comprising:

means (68) for processing the received transmit sequence by an algorithm inverse to the invertible feed-back combination algorithm to obtain a sequence which contains the information word and the tag; and

means (70) for extracting the tag from the sequence to obtain the information word.

18. A device according to claim 17, wherein the processing means (68) comprises a feed-forward shift register with delay units (60a-60d) and XOR gates (56, 60e), which is exactly inverse to a feed-back shift register which is used during generating and which comprises delay units (92a - 92d) and XOR gates (94, 96).

19. A device according to claim 17 or claim 18, wherein a tag of a certain length was placed in front of the information word during the generation of the received transmit sequence, wherein the extracting means (70) is arranged to cut off and reject (74) that portion of the sequence, starting from the begin of the sequence, whose length equals the length of the tag in order for the information word to be left.

20. A device according to one of claims 17 to 19, wherein the received transmit sequence has been subjected to a modulation, a nesting and / or a redundancy encoding process in a transmitter, further comprising:

means (78, 80) for demodulating;

means (82) for reversing the nesting process; and / or

means (84) for channel-decoding.

21. A method for generating a transmit sequence from an information word (40), which comprises a plurality of information units (42), comprising the following steps:

forming (10) a plurality of candidate transmit sequences from the information word with each candidate transmit sequence carrying the same information as the information word; and

examining (30) the plurality of candidate transmit sequences and for selecting the candidate transmit sequence from the plurality of candidate transmit sequences as a transmit sequence, which fulfils a predetermined criterion, wherein the predetermined criterion is selected, so that an out-of-band radiation of a transmitter does not exceed a tolerance limit when transmitting the selected candidate transmit sequence,

or that, as a predetermined criterion, the smallest peak value is used, so that the candidate transmit sequence having the smallest peak value fulfils the predetermined criterion, or

that, as a predetermined criterion, the lowest average power is used, so that the candidate transmit sequence having the lowest average power fulfils the predetermined criterion,

**characterised in that** the step of forming (10) comprises the following sub-steps:

adding (12) a tag (44) to the information word;

processing (16) the information word and the added tag by an invertible feed-back combination algorithm to obtain a combined information word, in which the information units are combined with each other and / or with the added tag such that the combined information word is uniquely identified by the tag;

further processing (18) of the combined information word to obtain a time candidate transmit sequence, and

wherein the forming step is further performed to generate the plurality of differing candidate transmit sequences by using different tags from the same information word.

22. A method for generating a transmit sequence from an information word (40), which comprises a plurality of information units (42), comprising the following steps:

forming (10) a plurality of candidate transmit sequences from the information word with each candidate transmit sequence carrying the same information as the information word, and

examining (30) the plurality of candidate transmit sequences to select the candidate transmit sequence from the plurality of candidate transmit sequences as a transmit sequence, which fulfils a predetermined criterion,

wherein the predetermined criterion is selected, so that an out-of-band radiation of a transmitter does not exceed a tolerance limit when transmitting the selected candidate transmit sequence,
or that, as a predetermined criterion, the smallest peak value is used, so that the candidate transmit sequence having the smallest peak value fulfils the predetermined criterion, or

that, as a predetermined criterion, the lowest average power is used, so that the candidate transmit sequence having the lowest average power fulfils the predetermined criterion,

**characterised in that** the step of forming (10) comprises the following sub-steps:

adding (12') a place holder tag to the information word;

processing (16) the information word and the added place holder tag by an invertible feedback combination algorithm to obtain a combined information word, in which the information units are combined with each other and / or with the added place holder tag (13');

linking (19) the combined information word or a word derived from the combined information word with a linking sequence (VS) which, using the same feed-back combination algorithm, is determined from a tag (22) to obtain a linked information word, which is uniquely identified by the tag; and

further processing (18') of the linked information word to obtain a time candidate transmit sequence,

wherein the forming step (10') is further performed to generate the plurality of differing candidate transmit sequences from the same information word by using different linking sequences (VS) determined from various tags.

23. A method for retrieving an information word from a received transmit sequence, which has been generated by a method according to claim 21 or 22, wherein the method comprises a step of processing the information word and a tag by an invertible feedback combination algorithm, and which comprises the following steps:

processing (68) the received transmit sequence by an algorithm inverse to the invertible feed-back combination algorithm to obtain a sequence which contains the information word and the tag; and

extracting (70) the tag from the sequence to obtain the information word.

**Claims for the following Contracting States : DE, ES, FR, GB, IT**

1. A device for generating a transmit sequence from an information word (40) which comprises a plurality of information units (42), comprising:

means (10) for forming a plurality of candidate transmit sequences from the information word, with each candidate transmit sequence carrying the same information as the information word; and

means (30) for examining the plurality of candidate transmit sequences and for selecting the candidate transmit sequence from the plurality of candidate transmit sequences as a transmit sequence, which fulfils a predetermined criterion,

wherein the predetermined criterion is selected, so that an out-of-band radiation of a transmitter does not exceed a tolerance limit when transmitting the selected candidate transmit sequence,

or that, as a predetermined criterion, the smallest peak value is used, so that the candidate transmit sequence having the smallest peak value fulfils the predetermined criterion, or

that, as a predetermined criterion, the lowest average power is used, so that the candidate transmit sequence having the lowest average power fulfils the predetermined criterion,

**characterised in that** the forming means (10) comprises:

means (12) for adding a tag (44) to the information word;

means (16) for processing the information word and the added tag by an invertible feed-back combination algorithm, wherein a combined information word is obtained, in which the information units are combined with the added tag, with the combined information word being uniquely identified by the tag; and

means (18) for further processing the combined information word wherein a time candidate transmit sequence is obtained,

wherein the forming means is further arranged to generate the plurality of candidate transmit sequences differing from each other by using different tags from the same information word.

2. A device for generating a transmit sequence from an information word (40), which comprises a plurality of information units (42), comprising:

means (10) for forming a plurality of candidate transmit sequences from the information word with each candidate transmit sequence carrying the same information as the information word; and

means (30) for examining the plurality of candidate transmit sequences and for selecting the candidate transmit sequence from the plurality of candidate transmit sequences as a transmit sequence which fulfils a predetermined criterion, wherein the predetermined criterion is selected, so that an out-of-band radiation of a transmitter does not exceed a tolerance limit when transmitting the selected candidate transmit sequence,

or that, as a predetermined criterion, the smallest peak value is used, so that the candidate transmit sequence having the smallest peak value fulfils the predetermined criterion, or

that, as a predetermined criterion, the lowest average power is used, so that the candidate transmit sequence having the lowest average power fulfils the predetermined criterion,

**characterised in that** the forming means comprises:

means (12') for adding a place holder tag to the information word;

means (16) for processing the information word and the added place holder tag by an invertible feed-back combination algorithm to obtain a combined information word, in which the information units are combined with each other and / or with the added place holder tag (13');

means (19) for linking the combined information word or a word derived from the combined information word with a linking sequence (VS) which is determined from a tag (22) by using the same feed-back combination algorithm to obtain a linked information word which is uniquely identified by the tag; and

means (18') for further processing the linked information word to obtain a time candidate transmit sequence;

wherein the forming means (10') is further arranged to generate from the same information word the plurality of differing candidate transmit sequences by using different linking sequences (VS) which are determined from various tags.

3. A device according to claim 1 or 2, wherein the means (16) for processing by an invertible feed-back combination algorithm includes a shift register comprising:

an input (50);

an output (52);

a feed-back path having first and second ends (54, 56) which is connected to the output (52) with its first end (54) and which comprises at least one delay unit (60a-60d); and

XORing means (56) for XORing an information unit at the output (50) with a value applied at the second end (56) of the feed-back path with the XORing means (56) being connected to the output (52) at the output side.

4. A device according to one of the preceding claims, wherein the tags indicate different states in a feed-back of the feed-back combination algorithm.

5. A device according to claim 3, wherein the feed-back path of the shift register comprises:

first delay means (60a) connected between the first end (54) of the feed-back path and a first node;

second delay means (60b) connected between the first node and a second node;

third delay means (60c) connected between the second node and a third node;

fourth delay means (60d) connected between the third node and a fourth node; and

XORing means (60e) which, on the input side, is connected to the first node and the fourth node and which, on the output side, forms the second end (56) of the feed-back path.

6. A device according to claim 1, wherein the means (16) for adding a tag places the tag as a prefix in front of the information word.

7. A device according to claim 1, wherein the further processing means (18) further follows an interleaver (17b).

8. A device according to claim 1, wherein the further-processing means (18) comprises:

mapping means (18a) for generating modulation values for a multiplicity of sub-carriers; and

means (18b) for performing an inverse Fourier transform with the modulation values assigned to the sub-carriers into the time domain to obtain an OFDM symbol as a time candidate transmit sequence.

9. A device according to claim 1, wherein the forming means (10) is arranged to generate the plurality of candidate transmit sequences in a successive time order, and comprising:

    first switch (24) for serially providing the individual tags (24) to the tag adding means (12);

    second switch (26) for serially providing the time candidate transmit sequences to the examining and selecting means (30); and

    control means for synchronously controlling the first and second switch (24, 26) such that the switches are advanced by one position, when a time candidate transmit sequence is generated and provided to the selecting means (30).

10. A device according to claim 1, wherein the means for processing by the feed-back combination algorithm is implemented by a feed-back shift register with at least one delay means in the feed-back path, and wherein the further processing means (18) comprises a redundancy encoder, which is implemented as a feed-forward shift register with at least one delay means, wherein both shift registers are coupled to share the at least one delay means (100a-100d).

11. A device according to claim 2, wherein the means (12') for adding the place holder tag (13') places the place holder tag as a prefix in front of the information word.

12. A device according to claim 2, wherein the means for forming (10) a plurality of candidate transmit sequences, comprises:

    means (17a) for redundancy-encoding of the information word and/or a means (17b) for nesting the redundancy-encoded information word or the combined information word to obtain the word derived by the combined information word.

13. A device according to claim 2, wherein the linking means (19) comprises:

    storage means for storing the various linking sequences determined from the various tags.

14. A device according to claim 2, wherein the means for processing by the feed-back combination algorithm is implemented by a feed-back shift register with at least one delay means in the feed-back path, and wherein the means for further processing (18) comprises a redundancy encoder which is implemented as a feed-forward shift register with at least one delay means, wherein both shift registers are coupled to share the at least one delay means (100a-100d).

15. A device according to claim 2, wherein the means (18') for further processing the linked information word comprises:

    mapping means for generating modulation values for a multiplicity of sub-carriers; and

    means for performing an inverse Fourier transform with the modulation values assigned to the sub-carriers into the time domain to obtain an OFDM symbol as a time candidate transmit sequence.

16. A device according to one of the preceding claims, wherein the examining means (30) is arranged to use, as a predetermined criterion, either the smallest peak value or the smallest out-of-band radiation or the lowest average power of the candidate transmit sequences or a weighted combination of the above criteria.

17. A device for retrieving an information word from a received transmit sequence, which has been generated by a device according to claim 1 or 2 comprising a means for processing the information word and a tag by an invertible feed-back combination algorithm, comprising:

    means (68) for processing the received transmit sequence by an algorithm inverse to the invertible feed-back combination algorithm to obtain a sequence which contains the information word and the tag; and

    means (70) for extracting the tag from the sequence to obtain the information word,

wherein the processing means (68) comprises a feed-forward shift register with delay units (60a-60d) and XOR gates (56, 60e), which is exactly inverse to a feed-back shift register which is used during generating and which comprises delay units (92a - 92d) and XOR gates (94, 96).

18. A device according to claim 17, wherein a tag of a certain length was placed in front of the information word during the generation of the received transmit sequence, wherein the extracting means (70) is arranged to cut off and reject (74) that portion of the sequence, starting from the begin of the sequence, whose length equals the length of the tag in order for the information word to be left.

19. A device according to one of claims 17 or 18, wherein the received transmit sequence has been subjected to a modulation, a nesting and / or a redundancy encoding process in a transmitter, further comprising:

means (78, 80) for demodulating;

means (82) for reversing the nesting process; and / or

means (84) for channel-decoding.

20. A method for generating a transmit sequence from an information word (40), which comprises a plurality of information units (42), comprising the following steps:

forming (10) a plurality of candidate transmit sequences from the information word with each candidate transmit sequence carrying the same information as the information word; and

examining (30) the plurality of candidate transmit sequences and for selecting the candidate transmit sequence from the plurality of candidate transmit sequences as a transmit sequence, which fulfils a predetermined criterion, wherein the predetermined criterion is selected, so that an out-of-band radiation of a transmitter does not exceed a tolerance limit when transmitting the selected candidate transmit sequence,

or that, as a predetermined criterion, the smallest peak value is used, so that the candidate transmit sequence having the smallest peak value fulfils the predetermined criterion, or

that, as a predetermined criterion, the lowest average power is used, so that the candidate transmit sequence having the lowest average power fulfils the predetermined criterion,

**characterised in that** the step of forming (10) comprises the following sub-steps:

adding (12) a tag (44) to the information word;

processing (16) the information word and the added tag by an invertible feed-back combination algorithm to obtain a combined information word, in which the information units are combined with each other and / or with the added tag such that the combined information word is uniquely identified by the tag;

further processing (18) of the combined information word to obtain a time candidate transmit sequence, wherein, before the sub-step of further processing (18), a sub-step of redundancy-encoding (17a) is performed, and

wherein the forming step is further performed to generate the plurality of differing candidate transmit sequences by using different tags from the same information word.

21. A method for generating a transmit sequence from an information word (40), which comprises a plurality of information units (42), comprising the following steps:

forming (10) a plurality of candidate transmit sequences from the information word with each candidate transmit sequence carrying the same information as the information word, and

examining (30) the plurality of candidate transmit sequences to select the candidate transmit sequence from the plurality of candidate transmit sequences as a transmit sequence, which fulfils a predetermined criterion,

wherein the predetermined criterion is selected, so that an out-of-band radiation of a transmitter does not exceed a tolerance limit when transmitting the selected candidate transmit sequence, or that, as a predetermined criterion, the smallest peak value is used, so that the candidate transmit sequence having the smallest peak value fulfils the predetermined criterion, or that, as a predetermined criterion, the lowest average power is used, so that the candidate transmit sequence having the lowest average power fulfils the predetermined criterion, **characterised in that** the step of forming (10) comprises the following sub-steps:

adding (12') a place holder tag to the information word;

processing (16) the information word and the added place holder tag by an invertible feed-back combination algorithm to obtain a combined information word, in which the information units are combined with each other and / or with the added place holder tag (13');

linking (19) the combined information word or a word derived from the combined information word with a linking sequence (VS) which, using the same feed-back combination algorithm, is determined from a tag (22) to obtain a linked information word, which is uniquely identified by the tag; and

further processing (18') of the linked information word to obtain a time candidate transmit sequence,

wherein the forming step (10') is further performed to generate the plurality of differing candidate transmit sequences from the same information word by using different linking sequences (VS) determined from various tags.

22. A method for retrieving an information word from a received transmit sequence, which has been generated by a method according to claim 20 or 21, wherein the method comprises a step of processing the information word and a tag by an invertible feedback combination algorithm, and which comprises the following steps:

processing (68) the received transmit sequence by an algorithm inverse to the invertible feed-back combination algorithm to obtain a sequence which contains the information word and the tag; and

extracting (70) the tag from the sequence to obtain the information word,

wherein the step of processing comprises a step of bit-wise delay of the received transmit sequence as well as a step of feed-forward XORing of the bit-wise delayed transmit sequence, wherein the bit-wise delay and feed-forward XORing is exactly inverse to a bit-wise delay and feed-back XORing used during the generation.

**Revendications**

**Revendications pour les Etats contractants suivants : AT, BE, CH, LI, CY, DK, FI, GR, IE, LU, MC, NL, PT, SE, TR**

1. Dispositif de création d'une séquence d'émission à partir d'un mot d'information (40) qui présente une pluralité d'unités d'informations (42), comprenant les caractéristiques suivantes :

un dispositif (10) de formation d'une pluralité de séquences d'émission de candidat à partir du mot d'information, chaque séquence d'émission de candidat portant la même information que le mot d'information ; et

un dispositif (30) de vérification de la pluralité des séquences d'émission de candidat et de sélection, comme séquence d'émission, à partir de la pluralité de séquences d'émission de candidat, de la séquence d'émission de candidat qui remplit un critère prédéterminé,

le critère prédéterminé étant sélectionné de telle manière qu'un rayonnement hors bande d'un dispositif d'émission ne dépasse pas une limite de tolérance lors de l'émission de la séquence d'émission de candidat sélectionnée,

ou que la valeur de crête la plus petite est utilisée comme critère prédéterminé, de sorte que la séquence d'émission de candidat, qui a la valeur de crête la plus petite, remplit le critère prédéterminé, ou
que la puissance moyenne la plus petite est utilisée comme critère prédéterminé, de sorte que la séquence d'émission de candidat, qui a la puissance moyenne la plus petite, remplit le critère prédéterminé,
**caractérisé en ce que** le dispositif (10) de formation présente les caractéristiques suivantes :

un dispositif (12) d'adjonction d'une étiquette (44) au mot d'information ;

un dispositif (16) de traitement du mot d'information, y compris l'étiquette ajoutée, au moyen d'un algorithme de combinaison rétroactif pouvant être inverti, un mot d'information combiné étant obtenu, dans lequel les unités d'informations sont combinées à l'étiquette ajoutée, le mot d'information combiné étant identifié de manière univoque par l'étiquette ; et

un dispositif (18) de traitement ultérieur du mot d'information combiné, une séquence temporelle d'émission de candidat étant obtenue,

le dispositif de formation étant en outre disposé afin de créer la pluralité de séquences d'émission de candidat différentes les unes des autres à partir du même mot d'information, en utilisant différentes étiquettes.

2. Dispositif de création d'une séquence d'émission à partir d'un mot d'information (40) qui présente une pluralité d'unités d'informations (42), comprenant les caractéristiques suivantes :

un dispositif (10) de formation d'une pluralité de séquences d'émission de candidat à partir du mot d'information, chaque séquence d'émission de candidat portant la même information que le mot d'information ; et

un dispositif (30) de vérification de la pluralité des séquences d'émission de candidat et de sélection, comme séquence d'émission, à partir de la pluralité de séquences d'émission de candidat, de la séquence d'émission de candidat qui remplit un critère prédéterminé, le critère prédéterminé étant sélectionné de telle manière qu'un rayonnement hors bande d'un dispositif d'émission ne dépasse pas une limite de tolérance lors de l'émission de la séquence d'émission de candidat sélectionnée.

ou de telle manière que la valeur de crête la plus petite est utilisée comme critère prédéterminé, de sorte que la séquence d'émission de candidat, qui a la valeur de crête la plus petite, remplit le critère prédéterminé ou

que la puissance moyenne la plus petite est utilisée comme critère prédéterminé, de sorte que la séquence d'émission de candidat, qui a la puissance moyenne la plus petite, remplit le critère prédéterminé,

**caractérisé en ce que** le dispositif de formation présente les caractéristiques suivantes :

un dispositif (12') d'adjonction d'une étiquette de substitution au mot d'information ;

un dispositif (16) de traitement du mot d'information, y compris l'étiquette de substitution ajoutée, au moyen d'un algorithme de combinaison rétroactif pouvant être inverti, un mot d'information combiné étant obtenu, dans lequel les unités d'informations sont combinées à l'étiquette de substitution (13') ajoutée,

un dispositif (19) de liaison du mot d'information combiné, ou d'un mot dérivé du mot d'information combiné, à une séquence de liaison (VS) qui est déterminée à partir d'une étiquette (22) en utilisant le même algorithme de combinaison rétroactif, un mot d'information lié, qui est identifié de manière univoque par l'étiquette, étant obtenu ; et

un dispositif (18') de traitement du mot d'information lié, une séquence temporelle d'émission de candidat étant obtenue,

le dispositif de formation (10') étant en outre disposé afin de créer, à partir du même mot d'information, la pluralité de séquences d'émission de candidat différentes les unes des autres en utilisant différentes séquences de liaison (VS) qui sont déterminées à partir de différentes étiquettes.

3. Dispositif selon la revendication 1 ou 2, dans lequel le dispositif (16) de traitement au moyen d'un algorithme de combinaison rétroactif pouvant être inverti comprend un registre à décalage ayant les caractéristiques suivantes :

une entrée (50) ;

une sortie (52) ;

une bifurcation de rétroaction comprenant une première et une deuxième extrémités (54, 56), qui est raccordée à la sortie (52) avec sa première extrémité (54) et présente au moins une unité de retard (60a-60d) ; et

un dispositif de liaison XOR (56) pour la liaison XOR d'une unité d'information sur l'entrée (50) à une valeur présente sur la deuxième extrémité (56) de la bifurcation de rétroaction, le dispositif de liaison XOR (56) étant raccordé, du côté sortie, à la sortie (52).

4. Dispositif selon l'une quelconque des revendications précédentes, dans lequel les étiquettes indiquent différents états dans une rétroaction de l'algorithme de combinaison rétroactif.

5. Dispositif selon la revendication 3, dans lequel la bifurcation de rétroaction du registre à décalage présente les caractéristiques suivantes :

un premier dispositif de retard (60a) qui est commuté entre la première extrémité (54) de la bifurcation de rétroaction et un premier noeud ;

un deuxième dispositif de retard (60b) qui est commuté entre le premier noeud et un deuxième noeud ;

un troisième dispositif de retard (60c) qui est commuté entre le deuxième noeud et un troisième noeud ;

un quatrième dispositif de retard (60d) qui est commuté entre le troisième noeud et un quatrième noeud ; et

un dispositif de liaison XOR (60e) qui, du côté entrée, est raccordé au premier noeud et au quatrième noeud, et qui, du côté sortie, forme la deuxième extrémité (56) de la bifurcation de rétroaction.

**6.** Dispositif selon la revendication 1, dans lequel le dispositif (16) d'adjonction d'une étiquette fait précéder l'étiquette au mot d'information comme préfixe.

**7.** Dispositif selon la revendication 1, dans lequel un codeur de redondance (17a) et/ou un dispositif d'entrelacement (17b) est commuté en amont du dispositif (18) de traitement ultérieur.

**8.** Dispositif selon la revendication 1, dans lequel le dispositif de traitement ultérieur (18) présente en outre les caractéristiques suivantes :

un dispositif de représentation (18a) pour créer des valeurs de modulation pour une pluralité de sous-porteuses ; et

un dispositif (18b) pour exécuter une transformation de Fourier inverse au moyen des valeurs de modulation attribuées aux sous-porteuses dans la plage de temps, un symbole OFDM étant obtenu comme séquence temporelle d'émission de candidat.

**9.** Dispositif selon la revendication 1, dans lequel le dispositif de formation (10) est disposé afin de créer la pluralité de séquences d'émission de candidat successivement dans le temps, et qui présente en outre les caractéristiques suivantes :

un premier commutateur (24) pour fournir en série des étiquettes (24) individuelles pour le dispositif (12) d'adjonction aux étiquettes ;

un deuxième commutateur (26) pour fournir en série les séquences temporelles d'émission de candidat pour le dispositif (30) de vérification et de sélection ; et

un dispositif de commande pour la commande synchrone du premier et du deuxième commutateurs (24, 26), de telle manière que les commutateurs sont commutés d'une position lorsqu'une séquence temporelle d'émission de candidat est créée et fournie au dispositif (30) de sélection.

**10.** Dispositif selon la revendication 1, dans lequel le dispositif de traitement est réalisé par l'algorithme de combinaison rétroactif au moyen d'un registre à décalage rétroactif comprenant au moins un dispositif de retard dans la bifurcation de rétroaction, et dans lequel le dispositif de traitement ultérieur (18) présente un codeur de redondance exécuté comme un registre à décalage couplé en avant comprenant au moins un dispositif de retard, les deux registres à décalage étant couplés afin d'utiliser ensemble au moins un dispositif de retard (100a-100d).

**11.** Dispositif selon la revendication 2, dans lequel le dispositif (12') d'adjonction de l'étiquette de substitution (13') fait précéder l'étiquette de substitution au mot d'information comme préfixe.

**12.** Dispositif selon la revendication 2, dans lequel le dispositif de formation (10) d'une pluralité de séquences d'émission de candidat présente les caractéristiques suivantes :

un dispositif (17a) pour le codage de redondance du mot d'information combiné et/ou un dispositif (17b) pour l'entrelacement du mot d'information codé par redondance ou du mot d'information combiné, le mot dérivé du mot d'information combiné étant obtenu.

**13.** Dispositif selon la revendication 2, dans lequel le dispositif (19) de liaison présente la caractéristique suivante:

un dispositif de mémorisation pour mémoriser les différentes séquences de liaison qui sont déterminées à partir des différentes étiquettes.

**14.** Dispositif selon la revendication 2, dans lequel le dispositif de traitement est réalisé par l'algorithme de combinaison rétroactif au moyen d'un registre à décalage rétroactif comprenant au moins un dispositif de retard dans la bifurcation de rétroaction, et dans lequel le dispositif de traitement ultérieur (18) présente un codeur de redondance exécuté comme un registre à décalage couplé en avant comprenant au moins un dispositif de retard, les deux registres à décalage étant couplés afin d'utiliser ensemble au moins un dispositif de retard (100a-100d).

**15.** Dispositif selon la revendication 2, dans lequel le dispositif (18') de traitement ultérieur du mot d'information lié présente les caractéristiques suivantes :

un dispositif de représentation pour créer des valeurs de modulation pour une pluralité de sous-porteuses ; et

un dispositif (18b) pour exécuter une transformation de Fourier inverse au moyen des valeurs de modulation attribuées aux sous-porteuses dans la plage de temps, un symbole OFDM étant obtenu comme séquence temporelle d'émission de candidat.

**16.** Dispositif selon l'une quelconque des revendications précédentes, dans lequel le dispositif (30) de vérification est disposé afin d'utiliser, comme critère prédéterminé, soit la valeur de crête la plus petite soit le rayonnement hors bande le plus petit soit la puissance moyenne la plus petite des séquences d'émission de candidat ou une combinaison pondérée des critères précédents.

17. Dispositif pour déterminer un mot d'information à partir d'une séquence d'émission reçue, qui a été créée par un dispositif selon la revendication 1 ou 2, qui présente un dispositif de traitement du mot d'information et d'une étiquette au moyen d'un algorithme de combinaison rétroactif pouvant être inverti, comprenant les caractéristiques suivantes :

un dispositif (68) de traitement de la séquence d'émission reçue au moyen d'un algorithme inverse à l'algorithme de combinaison rétroactif pouvant être inverti, une séquence, qui contient le mot d'information et l'étiquette, étant obtenue ; et
un dispositif (70) d'extraction de l'étiquette de la séquence, le mot d'information étant obtenu.

18. Dispositif selon la revendication 17, dans lequel le dispositif de traitement (68) présente un registre à décalage couplé en avant comprenant des unités de retard (60a-60d) et des liaisons XOR (56, 60e), qui est exactement inverse à un registre à décalage rétroactif utilisé lors de la création, qui présente des unités de retard (92a-92d) et des liaisons XOR (94, 96).

19. Dispositif selon la revendication 17 ou la revendication 18, dans lequel, lors de la création de la séquence d'émission reçue, une étiquette d'une certaine longueur a été placée avant le mot d'information, le dispositif (70) d'extraction étant disposé afin de couper la section de la séquence, dont la longueur est identique à la longueur de l'étiquette, en partant du début de la séquence, et de la rejeter (74) afin que le mot d'information reste.

20. Dispositif selon l'une quelconque des revendications 17 à 19, dans lequel la séquence d'émission reçue a été soumise à une modulation, à un entrelacement et/ou à un codage de redondance dans un émetteur, qui présente en outre les caractéristiques suivantes :

un dispositif (78, 80) de démodulation ;

un dispositif (82) d'annulation de l'entrelacement ; et/ou

un dispositif (84) de décodage de canaux.

21. Dispositif de création d'une séquence d'émission à partir d'un mot d'information (40) qui présente une pluralité d'unités d'informations (42), comprenant les étapes suivantes :

formation (10) d'une pluralité de séquences d'émission de candidat à partir du mot d'information, chaque séquence d'émission de candidat portant la même information que le mot d'information ; et

vérification (30) de la pluralité de séquences d'émission de candidat et sélection, comme séquence d'émission, à partir de la pluralité de séquences d'émission de candidat, de la séquence d'émission de candidat qui remplit un critère prédéterminé, le critère prédéterminé étant sélectionné de telle manière qu'un rayonnement hors bande d'un dispositif d'émission ne dépasse pas une limite de tolérance lors de l'émission de la séquence d'émission de candidat,

ou que la valeur de crête la plus petite est utilisée comme critère prédéterminé, de sorte que la séquence d'émission de candidat, qui a la valeur de crête la plus petite, remplit le critère prédéterminé, ou

que la puissance moyenne la plus petite est utilisée comme critère prédéterminé, de sorte que la séquence d'émission de candidat, qui a la puissance moyenne la plus petite, remplit le critère prédéterminé,

**caractérisé en ce que** l'étape de formation (10) présente les étapes partielles suivantes :

adjonction (12) d'une étiquette (44) au mot d'information ;

traitement (16) du mot d'information, y compris l'étiquette ajoutée, au moyen d'un algorithme de combinaison rétroactif pouvant être inverti, un mot d'information combiné étant obtenu, dans lequel les unités d'informations sont combinées à l'étiquette ajoutée, le mot d'information combiné étant identifié de manière univoque par l'étiquette ; et

traitement ultérieur (18) du mot d'information combiné, une séquence temporelle d'émission de candidat étant obtenue, et

l'étape de formation étant en outre exécutée afin de créer, à partir du même mot d'information, la pluralité de séquences d'émission de candidat différentes les unes des autres en utilisant différentes étiquettes.

22. Procédé de création d'une séquence d'émission à partir d'un mot d'information (40) qui présente une pluralité d'unités d'informations (42), comprenant les étapes suivantes :

formation (10) d'une pluralité de séquences d'émission de candidat à partir du mot d'information, chaque séquence d'émission de candidat portant la même information que le mot d'information ; et

vérification (30) de la pluralité de séquences d'émission de candidat et sélection, comme séquence d'émission, à partir de la pluralité de séquences d'émission de candidat, de la séquence d'émission de candidat qui remplit un critère prédéterminé,

le critère prédéterminé étant sélectionné de telle manière qu'un rayonnement hors bande d'un dispositif d'émission ne dépasse pas une limite de tolérance lors de l'émission de la séquence d'émission de candidat,

ou que la valeur de crête la plus petite est utilisée comme critère prédéterminé, de sorte que la séquence d'émission de candidat, qui a la valeur de crête la plus petite, remplit le critère prédéterminé, ou

que la puissance moyenne la plus petite est utilisée comme critère prédéterminé, de sorte que la séquence d'émission de candidat, qui a la puissance moyenne la plus petite, remplit le critère prédéterminé,

**caractérisé en ce que** l'étape de formation (10) présente les étapes partielles suivantes :

adjonction (12') d'une étiquette de substitution au mot d'information ;

traitement (16) du mot d'information, y compris l'étiquette de substitution ajoutée, au moyen d'un algorithme de combinaison rétroactif pouvant être inverti, un mot d'information combiné étant obtenu, dans lequel les unités d'informations sont combinées à l'étiquette de substitution ajoutée (13') ;

liaison (19) du mot d'information combiné, ou d'un mot dérivé du mot d'information combiné, à une séquence de liaison (VS), qui est déterminée à partir d'une étiquette (22) en utilisant le même algorithme de combinaison rétroactif, un mot d'information lié, qui est identifié de manière univoque par l'étiquette, étant obtenu ; et

traitement ultérieur (18') du mot d'information lié, une séquence temporelle d'émission de candidat étant obtenue, et

l'étape de formation (10') étant en outre exécutée afin de créer, à partir du même mot d'information, la pluralité de séquences d'émission de candidat différentes les unes des autres en utilisant différentes séquences de liaison (VS) qui sont déterminées à partir de différentes étiquettes.

**23.** Procédé de détermination d'un mot d'information à partir d'une séquence d'émission reçue, qui a été créée par un procédé selon la revendication 21 ou 22, le procédé présentant une étape de traitement du mot d'information et d'une l'étiquette au moyen d'un algorithme rétroactif pouvant être inverti, comprenant les étapes suivantes :

traitement (68) de la séquence d'émission reçue au moyen d'un algorithme inverse à l'algorithme de combinaison rétroactif pouvant être inverti, une séquence, qui contient le mot d'information et l'étiquette, étant obtenue ; et

extraction (70) de l'étiquette de la séquence, le mot d'information étant obtenu.

**Revendications pour les Etats contractants suivants : DE, ES, FR, GB, IT**

**1.** Dispositif de création d'une séquence d'émission à partir d'un mot d'information (40) qui présente une pluralité d'unités d'informations (42), comprenant les caractéristiques suivantes :

un dispositif (10) de formation d'une pluralité de séquences d'émission de candidat à partir du mot d'information, chaque séquence d'émission de candidat portant la même information que le mot d'information ; et

un dispositif (30) de vérification de la pluralité des séquences d'émission de candidat et de sélection, comme séquence d'émission, à partir de la pluralité de séquences d'émission de candidat, de la séquence d'émission de candidat qui remplit un critère prédéterminé,

le critère prédéterminé étant sélectionné de telle manière qu'un rayonnement hors bande d'un dispositif d'émission ne dépasse pas une limite de tolérance lors de l'émission de la séquence d'émission de candidat sélectionnée,

ou que la valeur de crête la plus petite est utilisée comme critère prédéterminé, de sorte que la séquence d'émission de candidat, qui a la valeur de crête la plus petite, remplit le critère prédéterminé, ou

que la puissance moyenne la plus petite est utilisée comme critère prédéterminé, de sorte que la séquence d'émission de candidat, qui a la puissance moyenne la plus petite, remplit le critère prédéterminé,

**caractérisé en ce que** le dispositif (10) de formation présente les caractéristiques suivantes :

un dispositif (12) d'adjonction d'une étiquette (44) au mot d'information ;

un dispositif (16) de traitement du mot d'information, y compris l'étiquette ajoutée, au moyen d'un algorithme de combinaison rétroactif pouvant être inverti, un mot d'information combiné étant obtenu, dans lequel les unités d'informations sont combinées à l'étiquette ajoutée, le mot d'information combiné étant identifié de manière univoque par l'étiquette ; et

un dispositif (18) de traitement ultérieur du mot d'information combiné, une séquence temporelle d'émission de candidat étant obtenue, un codeur de redondance (17a) étant commuté en amont du dispositif (18) de traitement ultérieur,

le dispositif de formation étant en outre disposé afin de créer la pluralité de séquences d'émission de candidat différentes les unes des autres à partir du même mot d'information, en utilisant différentes étiquettes.

2. Dispositif de création d'une séquence d'émission à partir d'un mot d'information (40), qui présente une pluralité d'unités d'informations (42), comprenant les caractéristiques suivantes :

un dispositif (10) de formation d'une pluralité de séquences d'émission de candidat à partir du mot d'information, chaque séquence d'émission de candidat portant la même information que le mot d'information ; et

un dispositif (30) de vérification de la pluralité des séquences d'émission de candidat et de sélection, comme séquence d'émission, à partir de la pluralité de séquences d'émission de candidat, de la séquence d'émission de candidat qui remplit un critère prédéterminé, le critère prédéterminé étant sélectionné de telle manière qu'un rayonnement hors bande d'un dispositif d'émission ne dépasse pas une limite de tolérance lors de l'émission de la séquence d'émission de candidat sélectionnée,

ou que la valeur de crête la plus petite est utilisée comme critère prédéterminé, de sorte que la séquence d'émission de candidat, qui a la valeur de crête la plus petite, remplit le critère prédéterminé ou

que la puissance moyenne la plus petite est utilisée comme critère prédéterminé, de sorte que la séquence d'émission de candidat, qui a la puissance moyenne la plus petite, remplit le critère prédéterminé,

**caractérisé en ce que** le dispositif de formation présente les caractéristiques suivantes :

un dispositif (12') d'adjonction d'une étiquette de substitution (44) au mot d'information ;

un dispositif (16) de traitement du mot d'information, y compris l'étiquette de substitution ajoutée, au moyen d'un algorithme de combinaison rétroactif pouvant être inverti, un mot d'information combiné étant obtenu, dans lequel les unités d'informations sont combinées à l'étiquette de substitution (13') ajoutée,

un dispositif (19) de liaison du mot d'information combiné ou d'un mot dérivé du mot d'information combiné à une séquence de liaison (VS) qui est déterminée à partir d'une étiquette (22) en utilisant le même algorithme de combinaison rétroactif, un mot d'information lié, qui est identifié de manière univoque par l'étiquette, étant obtenu ; et

un dispositif (18') de traitement du mot d'information lié, une séquence temporelle d'émission de candidat étant obtenue,

le dispositif de formation (10') étant en outre disposé afin de créer, à partir du même mot d'information, la pluralité de séquences d'émission de candidat différentes les unes des autres en utilisant différentes séquences de liaison (VS) qui sont déterminées à partir de différentes étiquettes.

3. Dispositif selon la revendication 1 ou 2, dans lequel le dispositif (16) de traitement au moyen d'un algorithme de combinaison rétroactif pouvant être inverti comprend un registre à décalage ayant les caractéristiques suivantes :

une entrée (50) ;

une sortie (52) ;

une bifurcation de rétroaction comprenant une première et une deuxième extrémités (54, 56), qui est raccordée à la sortie (52) avec sa première extrémité (54) et présente au moins une unité de retard (60a-60d) ; et

un dispositif de liaison XOR (56) pour la liaison XOR d'une unité d'information sur l'entrée (50) à une valeur présente sur la deuxième extrémité (56) de la bifurcation de rétroaction, le dispositif de liaison XOR (56) étant raccordé, du côté sortie, à la sortie (52).

4. Dispositif selon l'une quelconque des revendications précédentes, dans lequel les étiquettes indiquent différents états dans une rétroaction de l'algorithme de combinaison rétroactif.

5. Dispositif selon la revendication 3, dans lequel la bifurcation de rétroaction du registre à décalage présente les caractéristiques suivantes :

un premier dispositif de retard (60a) qui est commuté entre la première extrémité (54) de la bifurcation de rétroaction et un premier noeud ;

un deuxième dispositif de retard (60b) qui est commuté entre le premier noeud et un deuxième noeud ;

un troisième dispositif de retard (60c) qui est commuté entre le deuxième noeud et un troisième noeud ;

un quatrième dispositif de retard (60d) qui est commuté entre le troisième noeud et un quatrième noeud ; et

un dispositif de liaison XOR (60e) qui, du côté entrée, est raccordé au premier noeud et au quatrième noeud, et qui, du côté sortie, forme la deuxième extrémité (56) de la bifurcation de rétroaction.

6. Dispositif selon la revendication 1, dans lequel le dispositif (16) d'adjonction d'une étiquette fait précéder l'étiquette au mot d'information comme préfixe.

7. Dispositif selon la revendication 1, dans lequel un dispositif d'entrelacement (17b) est en outre commuté en amont du dispositif (18) de traitement ultérieur.

8. Dispositif selon la revendication 1, dans lequel le dispositif de traitement ultérieur (18) présente en outre les caractéristiques suivantes :

un dispositif de représentation (18a) pour créer des valeurs de modulation pour une pluralité de sous-porteuses ; et

un dispositif (18b) pour exécuter une transformation de Fourier inverse au moyen des valeurs de modulation attribuées aux sous-porteuses dans la plage de temps, un symbole OFDM étant obtenu comme séquence temporelle d'émission de candidat.

9. Dispositif selon la revendication 1, dans lequel le dispositif de formation (10) est disposé afin de créer la pluralité de séquences d'émission de candidat successivement dans le temps, et qui présente en outre les caractéristiques suivantes :

un premier commutateur (24) pour fournir en série des étiquettes (24) individuelles pour le dispositif (12) d'adjonction aux étiquettes ;

un deuxième commutateur (26) pour fournir en série les séquences temporelles d'émission de candidat pour le dispositif (30) de vérification et de sélection ; et

un dispositif de commande pour la commande synchrone du premier et du deuxième commutateurs (24, 26), de telle manière que les commutateurs sont commutés d'une position lorsqu'une séquence temporelle d'émission de candidat est créée et fournie au dispositif (30) de sélection.

10. Dispositif selon la revendication 1, dans lequel le dispositif de traitement est réalisé par l'algorithme de combinaison rétroactif au moyen d'un registre à décalage rétroactif comprenant au moins un dispositif de retard dans la bifurcation de rétroaction, et dans lequel le dispositif de traitement ultérieur (18) présente un codeur de redondance exécuté comme un registre à décalage couplé en avant comprenant au moins un dispositif de retard, les deux registres à décalage étant couplés afin d'utiliser ensemble au moins un dispositif de retard (100a-100d).

11. Dispositif selon la revendication 2, dans lequel le dispositif (12') d'adjonction de l'étiquette de substitution (13') fait précéder l'étiquette de substitution au mot d'information comme préfixe.

12. Dispositif selon la revendication 2, dans lequel le dispositif de formation (10) d'une pluralité de séquences d'émission de candidat présente les caractéristiques suivantes :

un dispositif (17a) pour le codage de redondance du mot d'information combiné et/ou un dispositif (17b) pour l'entrelacement du mot d'information codé par redondance ou du mot d'information combiné, le mot dérivé du mot d'information combiné étant obtenu.

**13.** Dispositif selon la revendication 2, dans lequel le dispositif (19) de liaison présente la caractéristique suivante:

> un dispositif de mémorisation pour mémoriser les différentes séquences de liaison qui sont déterminées à partir des différentes étiquettes.

**14.** Dispositif selon la revendication 2, dans lequel le dispositif de traitement est réalisé par l'algorithme de combinaison rétroactif au moyen d'un registre à décalage rétroactif comprenant au moins un dispositif de retard dans la bifurcation de rétroaction, et dans lequel le dispositif de traitement ultérieur (18) présente un codeur de redondance exécuté comme un registre à décalage couplé en avant comprenant au moins un dispositif de retard, les deux registres à décalage étant couplés afin d'utiliser ensemble au moins un dispositif de retard (100a-100d).

**15.** Dispositif selon la revendication 2, dans lequel le dispositif (18') de traitement ultérieur du mot d'information lié présente les caractéristiques suivantes :

> un dispositif de représentation pour créer des valeurs de modulation pour une pluralité de sous-porteuses ; et

> un dispositif (18b) pour exécuter une transformation de Fourier inverse au moyen des valeurs de modulation attribuées aux sous-porteuses dans la plage de temps, un symbole OFDM étant obtenu comme séquence temporelle d'émission de candidat.

**16.** Dispositif selon l'une quelconque des revendications précédentes, dans lequel le dispositif (30) de vérification est disposé afin d'utiliser, comme critère prédéterminé, soit la valeur de crête la plus petite soit le rayonnement hors bande le plus petit soit la puissance moyenne la plus petite des séquences d'émission de candidat ou une combinaison pondérée des critères précédents.

**17.** Dispositif pour déterminer un mot d'information à partir d'une séquence d'émission reçue qui a été créée par un dispositif selon la revendication 1 ou 2, qui présente un dispositif de traitement du mot d'information et d'une étiquette au moyen d'un algorithme de combinaison rétroactif pouvant être inverti, comprenant les caractéristiques suivantes :

> un dispositif (68) de traitement de la séquence d'émission reçue au moyen d'un algorithme inverse à l'algorithme de combinaison rétroactif pouvant être inverti, une séquence, qui contient le mot d'information et l'étiquette, étant obtenue ; et

un dispositif (70) d'extraction de l'étiquette de la séquence, le mot d'information étant obtenu ; le dispositif de traitement (68) présentant un registre à décalage couplé en avant comprenant des unités de retard (60a - 60d) et des liaisons XOR (56, 60e), qui est exactement inverse à un registre à décalage rétroactif utilisé lors de la création, qui présente des unités de retard (92a-92d) et des liaisons XOR (94, 96).

**18.** Dispositif selon la revendication 17, dans lequel, lors de la création de la séquence d'émission reçue, une étiquette d'une certaine longueur a été placée avant le mot d'information, le dispositif (70) d'extraction étant disposé afin de couper la section de la séquence, dont la longueur est identique à la longueur de l'étiquette, en partant du début de la séquence, et de la rejeter (74) afin que le mot d'information reste.

**19.** Dispositif selon la revendication 17 ou 18, dans lequel la séquence d'émission reçue a été soumise à une modulation, à un entrelacement et/ou à un codage de redondance dans un émetteur, qui présente en outre les caractéristiques suivantes :

> un dispositif (78, 80) de démodulation ;

> un dispositif (82) d'annulation de l'entrelacement ; et/ou

> un dispositif (84) de décodage de canaux.

**20.** Dispositif de création d'une séquence d'émission à partir d'un mot d'information (40) qui présente une pluralité d'unités d'informations (42), comprenant les étapes suivantes :

> formation (10) d'une pluralité de séquences d'émission de candidat à partir du mot d'information, chaque séquence d'émission de candidat portant la même information que le mot d'information ; et

> vérification (30) de la pluralité de séquences d'émission de candidat et sélection, comme séquence d'émission, à partir de la pluralité de séquences d'émission de candidat, de la séquence d'émission de candidat qui remplit un critère prédéterminé, le critère prédéterminé étant sélectionné de telle manière qu'un rayonnement hors bande d'un dispositif d'émission ne dépasse pas une limite de tolérance lors de l'émission de la séquence d'émission de candidat,

ou que la valeur de crête la plus petite est utilisée comme critère prédéterminé, de sorte que la séquence d'émission de candidat, qui a la valeur de crête la plus petite, remplit le critère prédéterminé, ou

que la puissance moyenne la plus petite est utilisée comme critère prédéterminé, de sorte que la séquence d'émission de candidat, qui a la puissance moyenne la plus petite, remplit le critère prédéterminé,

**caractérisé en ce que** l'étape de formation (10) présente les étapes partielles suivantes :

adjonction (12) d'une étiquette (44) au mot d'information ;

traitement (16) du mot d'information, y compris l'étiquette ajoutée, au moyen d'un algorithme de combinaison rétroactif pouvant être inverti, un mot d'information combiné étant obtenu, dans lequel les unités d'informations sont combinées à l'étiquette ajoutée, le mot d'information combiné étant identifié de manière univoque par l'étiquette ; et

traitement ultérieur (18) du mot d'information combiné, une séquence temporelle d'émission de candidat étant obtenue, une étape partielle du codage de redondance (17a) étant exécutée avant l'étape partielle du traitement ultérieur (18),

l'étape de formation étant en outre exécutée afin de créer, à partir du même mot d'information, la pluralité de séquences d'émission de candidat différentes les unes des autres en utilisant différentes étiquettes.

21. Procédé de création d'une séquence d'émission à partir d'un mot d'information (40) qui présente une pluralité d'unités d'informations (42), comprenant les étapes suivantes :

formation (10) d'une pluralité de séquences d'émission de candidat à partir du mot d'information, chaque séquence d'émission de candidat portant la même information que le mot d'information ; et

vérification (30) de la pluralité de séquences d'émission de candidat et sélection, comme séquence d'émission, à partir de la pluralité de séquences d'émission de candidat, de la séquence d'émission de candidat qui remplit un critère prédéterminé,

le critère prédéterminé étant sélectionné de telle manière qu'un rayonnement hors bande d'un dispositif d'émission ne dépasse pas une limite de tolérance lors de l'émission de la séquence d'émission de candidat,

ou que la valeur de crête la plus petite est utilisée comme critère prédéterminé, de sorte que la séquence d'émission de candidat, qui a la valeur de crête la plus petite, remplit le critère prédéterminé, ou

que la puissance moyenne la plus petite est utilisée comme critère prédéterminé, de sorte que la séquence d'émission de candidat, qui a la puissance moyenne la plus petite, remplit le critère prédéterminé,

**caractérisé en ce que** l'étape de formation (10) présente les étapes partielles suivantes :

adjonction (12') d'une étiquette de substitution au mot d'information ;

traitement (16) du mot d'information, y compris l'étiquette de substitution ajoutée, au moyen d'un algorithme de combinaison rétroactif pouvant être inverti, un mot d'information combiné étant obtenu, dans lequel les unités d'informations sont combinées à l'étiquette de substitution ajoutée (13') ;

liaison (19) du mot d'information combiné, ou d'un mot dérivé du mot d'information combiné, à une séquence de liaison (VS), qui est déterminée à partir d'une étiquette (22) en utilisant le même algorithme de combinaison rétroactif, un mot d'information lié, qui est identifié de manière univoque par l'étiquette, étant obtenu ; et

traitement ultérieur (18') du mot d'information lié, une séquence temporelle d'émission de candidat étant obtenue, et

l'étape de formation (10') étant en outre exécutée afin de créer, à partir du même mot d'information, la pluralité de séquences d'émission de candidat différentes les unes des autres en utilisant différentes séquences de liaison (VS) qui sont déterminées à partir de différentes étiquettes.

22. Procédé de détermination d'un mot d'information à partir d'une séquence d'émission reçue, qui a été créée par un procédé selon la revendication 20 ou 21, le procédé présentant une étape de traitement du mot d'information et d'une étiquette au moyen d'un algorithme rétroactif pouvant être inverti, comprenant les étapes suivantes :

traitement (68) de la séquence d'émission reçue au moyen d'un algorithme inverse à l'algorithme de combinaison rétroactif pouvant être inverti, une séquence, qui contient le mot d'information et l'étiquette, étant obtenue ; et

extraction (70) de l'étiquette de la séquence, le mot d'information étant obtenu,

l'étape de traitement présentant une étape du retard bit par bit de la séquence d'émission reçue ainsi qu'une étape de la liaison XOR, couplée en avant, de la séquence d'émission retardée bit par bit, le retard bit par bit et la liaison XOR couplée en avant étant exactement inverses à un retard bit par bit utilisé lors de la création et à une liaison XOR rétroactive.

Etiketten 22

Kand.-
sendesequenzen

10

26

32

30

24

14

Hinzufügen
der
Etiketten

rückgek.
Kombin.-
algorithmus

Weiterverarbeiten

34

Untersuchen
und
Auswählen

Inf.-
wort

20

32

Sendesequenz

12

16

18

32

Fig. 1

Fig. 2

Fig. 3

Fig. 4

Fig. 5

empf.
Sendesequ. ○————→

66

68

inverser
rückgekopp.
Kombin.-Alg.

→●——→

70

Extrahieren
des Etiketts

Informationswort ○

72

74 Etikett
✗

Fig. 6

EP 1 234 421 B1

```
  78              80              82    84       66    68       70    72

┌──────┐    ┌──────────┐   ┌──────┬──────┐     ┌──────┐   ┌──────┐
│ DFT  │──→─│ DEMAPPER │─→─│DEILV │DECOD │──→──→│ inv. │─→─│ Extr.│──→─● Inf.-
└──────┘    └──────────┘   └──────┴──────┘     │rückg.│   └──────┘      wort
                                               │ Alg. │      │
                                               └──────┘      │ Etikett
                                                        74 ──┘
                                                             ✕
```

**Fig. 7**

EP 1 234 421 B1

Fig. 8

Fig. 9

EP 1 234 421 B1

Fig. 10

EP 1 234 421 B1

EP 1 234 421 B1

42　　42　　　　　　　　┌Informationseinheit　　　　　　44　　44　　44　　44

|← Informationswort · · · →|← Etikett (Präfix) →|

40

Fig. 11